(19) Europäisches Patentamt
European Patent Office
Office européen des brevets

(11) **EP 1 852 270 B1**

(12) **EUROPEAN PATENT SPECIFICATION**

(45) Date of publication and mention of the grant of the patent:
**25.09.2013 Bulletin 2013/39**

(21) Application number: **06713460.1**

(22) Date of filing: **10.02.2006**

(51) Int Cl.:
***B41M 5/26*** *(2006.01)* ***B32B 27/00*** *(2006.01)*
***B32B 27/30*** *(2006.01)* ***B32B 27/36*** *(2006.01)*

(86) International application number:
**PCT/JP2006/302317**

(87) International publication number:
**WO 2006/087967 (24.08.2006 Gazette 2006/34)**

(54) **PROCESS FOR PRODUCING A LASER-MARKED LAMINATE AND USE OF A LAMINATE FOR LASER MARKING**

VERFAHREN ZUR HERSTELLUNG EINES LASERMARKIERBARTEN LAMINATS UNF VERWENDUNG EINES LAMINATS ZUR LASERMARKIERUNG

PROCEDE DE REALISATION D'UN STRATIFIÉ MARQUE PAR LASER ET UTILISATION D'UN STRATIFIÉ POUR MARQUAGE LASER

(84) Designated Contracting States:
**DE**

(30) Priority: **21.02.2005 JP 2005043416**

(43) Date of publication of application:
**07.11.2007 Bulletin 2007/45**

(73) Proprietor: **Techno Polymer Co., Ltd.**
**Tokyo 104-0041 (JP)**

(72) Inventors:
- **Kawakami, Kazuyoshi**
  **c/o Techno Polymer Co., Ltd.**
  **Tokyo, 1040041 (JP)**
- **Kurimoto, Hideyuki**
  **c/o Techno Polymer Co., Ltd.**
  **Tokyo, 1040041 (JP)**
- **ISHIDA, M.**
  **Mitsubishi Chemical Group Sce. & Tech.**
  **Yokohama-shi, Kanagawa, 2278502 (JP)**
- **Kotani, Tomoyuki**
  **c/o Mitsubishi Chemical Co.**
  **Tokyo, 1080014 (JP)**
- **Takahira, Kazunori**
  **c/o Mitsubishi Chemical Co.**
  **Tokyo, 1080014 (JP)**

(74) Representative: **HOFFMANN EITLE**
**Patent- und Rechtsanwälte**
**Arabellastrasse 4**
**81925 München (DE)**

(56) References cited:

| | |
|---|---|
| **EP-A- 0 258 836** | **EP-A- 1 228 893** |
| **WO-A-2004/113090** | **JP-A- 03 270 980** |
| **JP-A- 06 008 633** | **JP-A- 08 127 175** |
| **JP-A- 09 164 625** | **JP-A- 2001 011 326** |
| **JP-A- 2001 302 872** | **JP-A- 2002 273 832** |
| **JP-A- 2005 199 626** | **US-B1- 6 482 768** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 852 270 B1

## Description

### TECHNICAL FIELD

The present invention relates to the use of a laminate in a multi-color laser marking method.

### BACKGROUND ART

Conventionally, various displays or indications (including characters, figures, symbols and combination thereof) have been formed on the surface of sheet- like thermoplastic resin molded products such as, for example, prepaid cards, by printing methods such as silk printing. However, in the printing methods, it is required to produce a printing plate for each display or indication, resulting in high costs and prolonged production time. In addition, there arises such a significant problem that defectives produced owing to displacement of the printing plate or bleeding of a printing ink are hardly recycled and, therefore, must be disposed of.

On the other hand, in recent years, there have been proposed thermoplastic polymer compositions for laser marking which are capable of forming multi-color markings on the surface of a resin product by irradiating a laser light thereto. In particular, techniques for forming markings with a larger number of colors have been recently developed. For example, there has been proposed the method of irradiating a laser light onto a molded product containing a substance that undergoes discoloration or decolorization upon absorbing a laser light, and a pigment substance that is hardly influenced by irradiation with the laser light (refer to Patent references 1 and 2). These thermoplastic polymer compositions for laser marking are molded into so-called thick-wall products such as household goods, electric appliances and OA equipments, and various displays or indications are formed on the surface of these products using a laser marking apparatus.

Patent reference 1:Japanese Patent Application Laid-open (KOKAI) No. 6-297828
Patent reference 2:Japanese Patent Application Laid-open (KOKAI) No. 8-127175

JP 2001-302872 A describes a resin composition capable of exhibiting a clear black marking on a light-colored molded product without damaging impact resistance and a molded product comprising the same. The resin composition for laser marking includes 0.1-10 ppm of a carbon black having an average particle size of 50-200 nm, 0.01-0.5 parts by weight of a rutile titanium dioxide, 0-5 parts by weight of one or more coloring agents selected from among anthraquinone based coloring agent, mono azo based coloring agent, diazo based coloring agent and phthalocyanine based coloring agent; and 100 parts by weight of a thermoplastic resin comprising 10-50 parts by weight of a rubber including graft copolymer, 0-50 parts by weight of a maleimide based copolymer and 5-90 parts by weight of a vinyl cyanide based copolymer.

WO 2004/113090 A1 describes ink-receptive coating compositions and articles containing a layer formed from such coating compositions. The articles comprise a polymer film substrate and an ink-receptive layer on the upper surface of the polymer film substrate. The articles may also comprise an adhesive layer on the bottom surface of the polymer film substrate and have a print image on the upper surface of the ink-receptive layer.

EP 1 228 893 A2 describes an image-forming material which comprises an image-receiving sheet comprising a support and an image-receiving layer and a thermal transfer sheet comprising a support, a light-to-heat conversion layer and an image-forming layer.

EP 0 258 836 describes a transfer recording medium, comprising a light transmitting support having provided thereon a heat transfer solid ink layer via an interlayer having a photolyzable compound. The recording medium provides a clear and high-quality color image on an image-receiving sheet.

US 6 482 768 B1 describes a laser thermal transfer material having a light-to-heat conversion layer and an image forming layer on a support, the image forming layer comprising a compound having a isoindoline ring, a monoazo or disazo compound.

JP 2002-273832 A describes a plastic multilayered sheet for laser marking which is composed of at least a surface layer and an inner layer. The sheet is formed of a surface layer comprising a transparent thermoplastic resin, and an inner layer of a thermoplastic resin composition prepared by adding 0.01-5 parts by weight of an energy absorbing material absorbing laser beam and 0.5-7 parts by weight of a colorant to the material of 100 parts by weight of a thermoplastic resin.

JP 2001-011326 A describes a resin composition capable of carrying out color marking by irradiation of laser beams. The resin composition further comprises a thermoplastic resin, a dye or a pigment having high absorptivity for laser energy, a dye or a pigment having a color different from that of the first dye or a pigment and low absorptivity for laser energy, and a fatty acid metal salt. A resin composition comprising an acrylic resin and a styrene-based resin in a weight ratio of 20/80 to 80/20 can be used as the thermoplastic resin.

JP 08 127 175 A describes a resin composition for laser marking containing 100 parts by weight of a thermoplastic resin, 0.001 to 20 parts by weight of low order titanium oxide and/or carbon black and 0.002 to 20 parts by weight of a colorant which is not decomposed by the laser.

## DISCLOSURE OF THE INVENTION

### PROBLEM TO BE SOLVED BY THE INVENTION

An object of the present invention is to provide a laminate for laser marking which is useful for forming displays or indications, for example, on the surface of sheet-like molded products made of thermoplastic resins, by suitably employing thermoplastic polymer compositions for laser marking.

### MEANS FOR SOLVING THE PROBLEM

As a result of the present inventors' earnest study, it has been found that when the thermoplastic polymer composition for laser marking is laminated on a transparent thermoplastic resin to form a laminate for laser marking, since the transparent thermoplastic resin is used as a melt-bonding means, the laminate having markings thereon can be readily attached onto the surface of sheet-like molded products made of thermoplastic resins.

The present invention has been attained on the basis **of the above finding. The present invention relates to** a process for producing a laminate which is laser-marked with two or more different color tones, which process comprises irradiating two or more laser lights having different energies to a laminate for laser marking, comprising:

a layer A comprising a multi-color developing laser marking thermoplastic polymer composition capable of producing markings having two or more different color tones by irradiating thereto two or more laser lights having different energies from each other, the composition satisfying the following requirements (1) and (2):

(1) comprising, at the following mixing ratio,

a chromatic colorant which has an exothermic peak temperature lying within the range of 360 to 590°C as measured by a differential thermal analysis, the chromatic colorant having at least one skeleton selected from the group consisting of a phthalocyanine skeleton, a diketo-pyrrolopyrrole skeleton, a dioxazine skeleton, a quinacridone skeleton, a quinophtahlone skeleton, an anthraquinone skeleton, a perylene skeleton and a metal complex skeleton;
a black substance capable of being dissipated by itself or discolored when exposed to the laser lights;
and a thermoplastic polymer selected from the group consisting of (i) rubber-reinforced thermoplastic resins produced by using methyl methacrylate as a monomer component, (ii) polymethyl methacrylate and copolymers containing a methyl methacrylate monomer unit in an amount of not less than 30% by weight, (iii) polyacetal resins and (iv) polyamide resins,

wherein the rubber-reinforced thermoplastic resins produced by using methyl methacrylate as a monomer component (i) are selected form the group consisting of

(i-1) a rubber-reinforced copolymer resin obtained by polymerizing a monomer containing methyl methacrylate in the presence of the rubber polymer,
(i-2) a rubber-reinforced thermoplastic resin comprising a combination of the above rubber-reinforced copolymer resin (i-1) and a (co)polymer obtained by polymerizing a monomer containing methyl methacrylate,
(i-3) a rubber-reinforced thermoplastic resin comprising a combination of the above rubber-reinforced copolymer resin (i-1) and a (co)polymer obtained by polymerizing a monomer containing an aromatic vinyl compound and a cyanided vinyl compound, and
(i-4) a rubber-reinforced thermoplastic resin comprising a combination of a rubber-reinforced copolymer resin obtained by polymerizing a monomer containing an aromatic vinyl compound and a cyanided vinyl compound in the presence of the rubber polymer without using methyl methacrylate, and a (co)polymer obtained by polymerizing a monomer containing methyl methacrylate, and

(2) containing the chromatic colorant and the black substance in an amount of from 0.001 to 3 parts by weight and from 0.01 to 2 parts by weight, respectively, on the basis of 100 parts by weight of the thermoplastic polymer; and

a layer B formed on at least one surface of the layer A, the layer B comprising a transparent thermoplastic resin,

and exhibiting a light transmittance of not less than 70 % as a single layer.

The present invention further relates to the use of the laminate comprising layers A and B as defined above, wherein layer B is formed on at least one surface of the layer A, in a multi-color laser marking method comprising (a) a step of irradiating two or more laser lights having different energies to the laminate to produce markings having two or more color tones thereon.

## EFFECT OF THE INVENTION

In accordance with the present invention, there is provided a laminate for laser marking which is useful for forming displays or indications, for example, on the surface of sheet-like molded products made of thermoplastic resins.

## BRIEF DESCRIPTION OF THE DRAWINGS

Fig. 1 is an explanatory view showing a laser marking method used in the present invention.
Fig. 2 is an explanatory view showing an example of a laminate with multi-color markings produced according to the process of the present invention.
Fig. 3 is an explanatory view showing an exothermic peak temperature of a copper phthalocyanine pigment.

## EXPLANATION OF REFERENCE NUMERALS

1: Laminate; 2: Layer A comprising a thermoplastic polymer composition for multi-color developing laser marking; 3a: Chromatic color marking portion; 3b: White color marking portion; 4: Layer B comprising a transparent thermoplastic resin.

## PREFERRED EMBODIMENTS FOR CARRYING OUT THE INVENTION

The present invention will be described in detail below. The laminate for laser marking for use in the present invention (hereinafter referred to merely as the "laminate") includes a layer A and a layer B formed on at least one surface of the layer A. The layer A comprises a specific multi-color developing laser marking thermoplastic polymer composition (a) capable of producing markings having two or more different color tones by irradiating thereto two or more laser lights having different energies from each other. The layer B comprises a transparent thermoplastic resin (b) having a light transmittance of not less than 70% as a single layer.

<Multi-color developing laser marking thermoplastic polymer composition (a)>

In the present invention, the multi-color developing laser marking thermoplastic polymer composition (a) means a thermoplastic polymer composition capable of producing markings having two or more different color tones by irradiating thereto two or more laser lights which are different in energy from each other.

The thermoplastic polymer composition (a) used in the present invention contains a chromatic colorant, a black substance capable of being dissipated by itself or discolored when exposed to the laser lights, and a thermoplastic polymer. The content of the chromatic colorant in the composition (a) is 0.001 to 3 parts by weight on the basis of 100 parts by weight of the thermoplastic polymer, and the content of the black substance is 0.01 to 2 parts by weight on the basis of 100 parts by weight of the thermoplastic polymer.

The multi-color developing laser marking mechanism of the above thermoplastic polymer composition (a) is generally considered to be based on the following phenomenon, though not clearly determined. Meanwhile, the multi-color developing laser marking mechanism of the present invention is not particularly limited to such a mechanism as specified below.

When a laser light is irradiated to the laminate of the present invention which contains the above thermoplastic polymer composition (a) in one layer thereof, the black substance tends to undergo dissipation, discoloration, etc., and the chromatic colorant tends to undergo decomposition, scattering, etc., according to an amount of energy of the laser light irradiated. In the portions where the black substance undergoes vaporization, discoloration, etc., colors of substances other than the black substance are relatively strongly exhibited as compared to those portions where the black substance is free from the above phenomena. In addition, in the portions where the chromatic colorant undergoes decomposition, scattering, etc., since a density of the chromatic color derived from the chromatic colorant is relatively decreased as compared to those portions where the chromatic colorant is free from the above phenomena, these portions exhibit such

a faded color or a white color. The degree of change in color tone in the respective laser-irradiated portions varies depending upon energy of the laser light irradiated. Therefore, it is considered that when irradiating two or more laser lights which are different in energy from each other, the thermoplastic polymer composition exhibits markings having tow or more different color tones. Also, the chromatic colorant used in the present invention usually undergoes decomposition, scattering, etc., upon exposed to a higher energy than the energy with which the black substance undergoes vaporization, discoloration, etc. Therefore, for example, when a laser light having a low energy is irradiated to a molded product having a black or dark background color, the irradiated portion undergoes development of a color strongly influenced by the substance derived from the chromatic colorant (hereinafter occasionally referred to merely as the "color derived from the chromatic colorant"). Whereas, when a laser light having a high energy is irradiated to the molded product, markings produced on the irradiated portions exhibit the faded color owing to decrease in density of the color derived from the chromatic colorant. Thus, it is considered that when irradiating the molded product with the two or more different laser lights, the irradiated portions are formed with markings having two or more different color tones other than a black or dark color as a color (background color) of the laser-unirradiated portions.

1. Chromatic colorant for multi-color developing laser marking:

The chromatic colorant used in the present invention may be any colorant unless the excellent multi-color developing laser marking performance of the present invention is adversely affected. The chromatic colorant has an exothermic peak temperature which lies within the range of 360 to 590°C as measured by a differential thermal analysis. The lower limit of the exothermic peak temperature is more preferably 380°C and still more preferably 400°C, whereas the upper limit of the exothermic peak temperature is more preferably 585°C. When the exothermic peak temperature of the chromatic colorant is too low, in the case where a laser light having a low energy is irradiated thereto, markings which should exhibit the color derived from the chromatic colorant tend to be unclear. On the other hand, when the exothermic peak temperature of the chromatic colorant is too high, in the case where a laser light having a high energy is irradiated thereto, markings which should exhibit a faded color owing to decrease in density of the color derived from the chromatic colorant tend to be unclear. Meanwhile, the measuring conditions for the differential thermal analysis are described in Reference Examples below.

The chromatic colorant used in the present invention may be made of any substance as long as the exothermic peak temperature thereof as measured by the differential thermal analysis lies within the above-specified range, and the colorant is capable of forming markings having two or more different colors on the laminate of the present invention by irradiating laser lights thereto. As far as the exothermic peak temperature lies within the above-specified range, two or more chromatic colorants may be used in combination thereof. The color of the chromatic colorant may be any color other than black and white colors, such as a red-based color, a yellow-based color, a blue-based color, a violet-based color, a green-based color, etc. The chromatic colorant may be either in the form of a pigment or a dye.

The chromatic colorant whose exothermic peak temperature as measured by a differential thermal analysis lies within the above-specified range include the following colorants in which the colors expressed in the parentheses are examples of colors developed by the respective colorants. Examples of the chromatic colorant include phthalocyanine skeleton-containing pigments or dyes (blue to green color), diketo-pyrrolopyrrole skeleton-containing pigments or dyes (orange to red color), dioxazine skeleton-containing pigments or dyes (violet color), quinacridone skeleton-containing pigments or dyes (orange to violet color), quinophthalone skeleton-containing pigments or dyes (yellow to red color), anthraquinone skeleton-containing pigments or dyes (yellow to blue color), perylene skeleton-containing pigments or dyes (red to violet color), and metal complex skeleton-containing pigments or dyes (yellow to violet color). When the composition (molded product) contains the colorant having at least one skeleton selected from the group consisting of a phthalocyanine skeleton, a diketo-pyrrolopyrrole skeleton, a dioxazine skeleton, a quinacridone skeleton, a quinophthalone skeleton, an anthraquinone skeleton, a perylene skeleton, a metal complex skeleton, etc., clear markings having two or more different color tones including the color derived from the chromatic colorant can be suitably formed on the surface of the composition (molded product) having a black or dark background color. Among these colorants, preferred are chromatic colorants having at least one skeleton selected from the group consisting a phthalocyanine skeleton, a diketo-pyrrolopyrrole skeleton, a dioxazine skeleton, a quinacridone skeleton, a quinophthalone skeleton, a perylene skeleton and a metal complex skeleton, and more preferred are chromatic colorants having at least one skeleton selected from the group consisting a phthalocyanine skeleton, a diketo-pyrrolopyrrole skeleton and a dioxazine skeleton. Specific examples of the respective chromatic colorants are described below.

1-1. Phthalocyanine skeleton-containing chromatic colorants:

Specific examples of the phthalocyanine skeleton-containing chromatic colorants may include compounds represented by the following general formula (1):

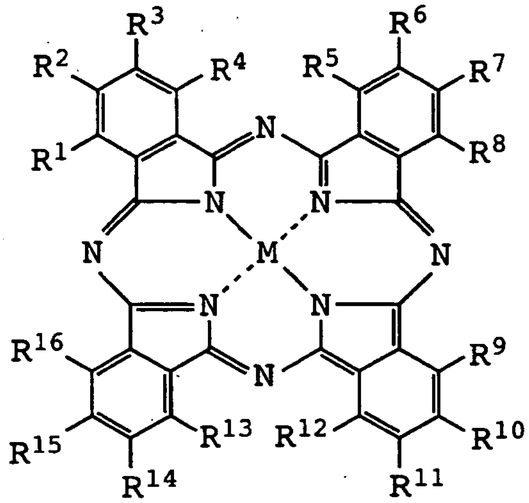

(1)

wherein M is a coordinated metal atom or two hydrogen atoms; $R^1$ to $R^{16}$ are each independently an optional functional group.

The above phthalocyanine skeleton-containing chromatic colorants may be in the form of either a pigment or a dye. In the above general formula (1), M is preferably copper (Cu), aluminum (Al), zinc (Zn), tin (Sn) or two hydrogen atoms, more preferably copper (Cu), aluminum (Al) or zinc (Zn), and still more preferably copper (Cu) or aluminum (Al). Meanwhile, when M is a metal, a ligand such as a halogen atom and OH may be bonded thereto.

Also, in the above general formula (1), $R^1$ to $R^{16}$ are each preferably a hydrogen atom; a halogen atom such as fluorine, chlorine, bromine and iodine; or a substituent group such as a sulfonamide group ($-SO_2NHR$), $-SO_3^-\cdot NH_3R^+$ wherein R is an alkyl group having 1 to 20 carbon atoms. Also, a plurality of the adjacent R groups contained in $R^1$ to $R^{16}$ may be suitably bonded to each other to form an aromatic ring. Among these groups as $R^1$ to $R^{16}$, more preferred are a hydrogen atom and a sulfonamide group.

The preferred specific structures (1) to (6) of the above phthalocyanine skeleton-containing chromatic colorants are enumerated below. Among these structures, more preferred are the structures (1), (3) and (4).

(1) Copper phthalocyanine pigments represented by the above general formula (1) in which M is Cu, and $R^1$ to $R^{16}$ are each a hydrogen atom:

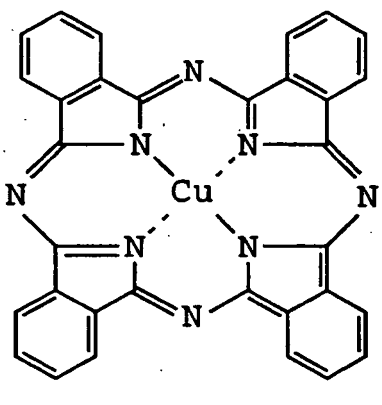

(2)

The above copper phthalocyanine pigment may be in the form of either an α-type crystal or a β-type crystal. The β-type copper phthalocyanine pigment generally has an average secondary particle diameter of more than 20 μm and not more than 30 μm. In the present invention, the upper limit of the average secondary particle diameter of the β-type copper phthalocyanine pigment is preferably 20 μm and more preferably 10 μm, and the lower limit thereof is 1 μm. Meanwhile, the average secondary particle diameter may be determined by using a laser scattering particle size distribution measuring apparatus, etc.

(2) Halogen-containing copper phthalocyanine pigments represented by the above general formula (1) in which M is Cu, and $R^1$ to $R^{16}$ are each independently a hydrogen atom or a halogen atom. Meanwhile, the halogen atom is

preferably a chlorine atom or a bromine atom.

(3) Solvent- soluble copper phthalocyanine dyes represented by the above general formula (1) in which M is Cu, and 4 to 8 groups and preferably 4 groups of $R^1$ to $R^{16}$ are the above sulfonamide group or- $SO_3$- $\cdot NH_3R^+$ and preferably the sulfonamide group. Among these dyes, especially preferred solvent- soluble copper phthalocyanine dyes are those having a structure represented by the following general formula (3) :

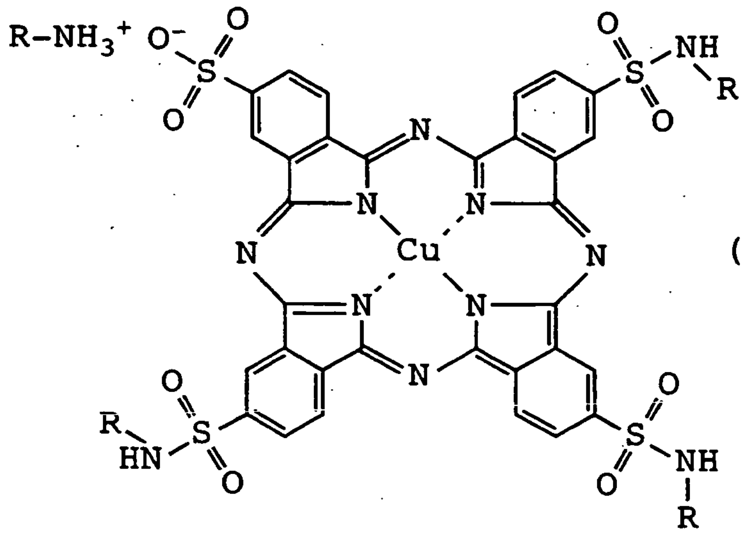

(3)

wherein respective R groups are each independently an alkyl group having 1 to 20 carbon atoms.

In the above general formula (3), the R groups are more preferably each independently an alkyl group having 4 to 8 carbon atoms.

(4) Aluminum phthalocyanine pigments represented by the above general formula (1) in which M is Al, and $R^1$ to $R^{16}$ are each a hydrogen atom. Al is preferably coordinated with -OH or -Cl and more preferably -OH as a ligand. Among these pigments, especially preferred aluminum phthalocyanine pigments are those having a structure represented by the following general formula (4):

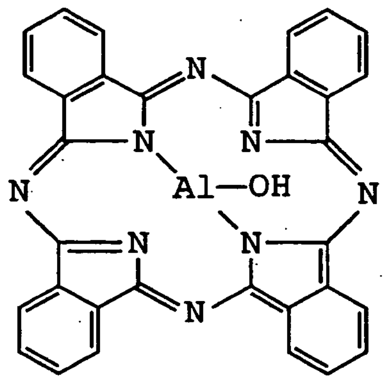

(4)

(5) Tin phthalocyanine pigments represented by the above general formula (1) in which M is Sn, and $R^1$ to $R^{16}$ are each independently a hydrogen atom or a halogen atom.

(6) Zinc phthalocyanine pigments represented by the above general formula (1) in which M is Zn, and $R^1$ to $R^{16}$ are each independently a hydrogen atom or a halogen atom. The structure of the zinc phthalocyanine pigments is represented by the following general formula (5):

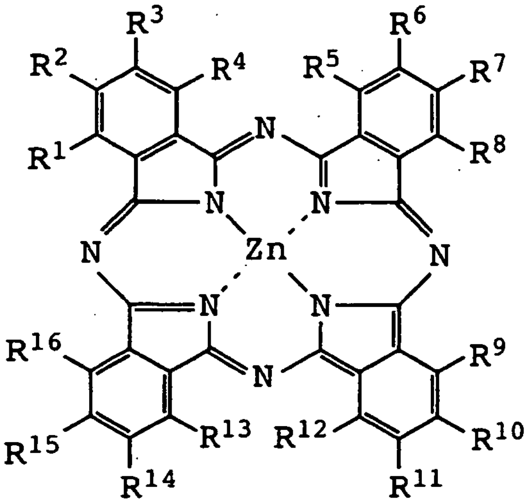

(5)

wherein $R^1$ to $R^{16}$ are each independently a hydrogen atom or a halogen atom.

Among these pigments, especially preferred zinc phthalocyanine pigments are those represented by the above formula (5) wherein $R^1$ to $R^{16}$ are all hydrogen atoms.

1-2. Diketo-pyrrolopyrrole skeleton-containing chromatic colorant:

Examples of the diketo-pyrrolopyrrole skeleton-containing chromatic pigments may include those compounds represented by the following general formula (6). These chromatic colorants are usually in the form of a pigment.

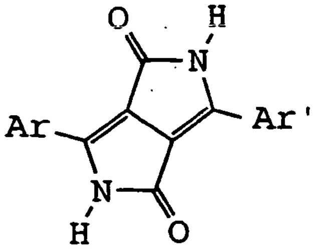

(6)

wherein Ar and Ar' are each independently an aromatic ring which may contain a substituent group.

The aromatic ring as Ar and Ar' may be any aromatic ring as long as it has an aromatic property, and is usually an aromatic ring constituted from a monocyclic ring or 2 to 6 condensed rings each in the form of a 5-membered or 6-membered ring which may also contain a hetero atom such as O, S and N. Specific examples of the aromatic ring may include a benzene ring, a naphthalene ring, an anthracene ring, a phenathrene ring, a fluorene ring, a pyridine ring, a thiophene ring, a pyrrole ring, a furan ring, a benzothiophene ring, a benzofuran ring, a benzopyrrole ring, an imidazole ring, a quinoline ring, an isoquinoline ring, a carbazole ring, a thiazole ring, a dibenzothiophene ring, etc. Among these aromatic rings, preferred are 6-membered rings, more preferred are 6-membered monocyclic rings, and still more preferred is a benzene ring.

The aromatic ring preferably contains a substituent group. Examples of the preferred substituent group may include a halogen atom, an alkyl group having 1 to 12 carbon atoms, an alkoxy group having 1 to 12 carbon atoms, an amino group, $-NHCOR^1$, $-COR^1$ and $-COOR^1$ wherein $R^1$ is an alkyl group having 1 to 12 carbon atoms or a (hetero) aryl group having 12 or less carbon atoms. Among these substituent groups, preferred are halogen atoms, and more preferred is a chlorine atom.

1-3. Dioxazine skeleton-containing chromatic colorants:

Examples of the dioxazine skeleton-containing chromatic colorants may include those compounds having a skeleton represented by the following general formula (7). These dioxazine skeleton-containing chromatic colorants are usually in the form of a pigment.

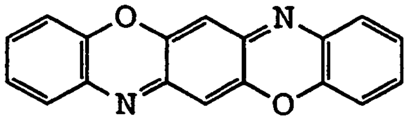

(7)

The chromatic colorant having the above skeleton may or may not be a compound containing a substituent group, and is preferably the compound containing a substituent group. The substituent group-containing compound is represented, for example, by the following general formula (8):

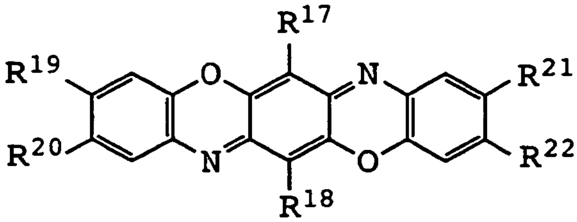

(8)

wherein $R^{17}$ to $R^{22}$ are each independently a halogen atom, -NHCOR$^1$ (wherein $R^1$ is an alkyl group having 1 to 12 carbon atoms or a (hetero)aryl group having 12 or less carbon atoms), an alkyl group having 1 to 12 carbon atoms or an alkoxy group having 1 to 12 carbon atoms.

Among the above dioxazine skeleton-containing chromatic colorants, preferred are those containing the substituent groups $R^{17}$ and $R^{18}$ in the above general formula (8). $R^{17}$ and $R^{18}$ are each preferably a halogen atom or -NHCOR$^1$, and more preferably -NHCOR$^1$, whereas $R^{19}$ to $R^{22}$ are each preferably a halogen atom, -NHCOR$^1$, an alkyl group having 1 to 12 carbon atoms or an alkoxy group having 1 to 12 carbon atoms, and more preferably an alkoxy group having 1 to 12 carbon atoms or -NHCOR$^1$.

<u>1-4. Quinacridone skeleton-containing chromatic colorants:</u>

Examples of the quinacridone skeleton-containing chromatic colorants may include those compounds having a skeleton represented by the following general formula (9). The quinacridone skeleton-containing chromatic colorants are usually in the form of a pigment.

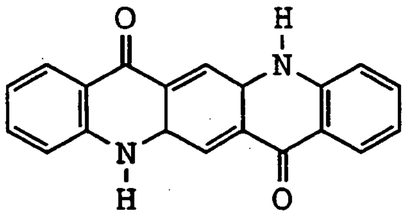

(9)

The colorant containing the above skeleton may be a compound which may or may not contain a substituent group. The structure of the substituent group-containing compound is represented by the following general formula (10):

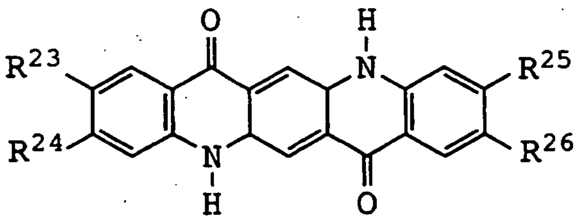

(10)

In the above general formula (10), the substituent groups are preferably bonded to the positions of $R^{23}$ to $R^{26}$. Examples of the preferred substituent groups include a halogen atom and an alkyl group having 1 to 12 carbon atoms.

<u>1-5. Quinophthalone skeleton-containing chromatic colorants:</u>

Examples of the quinophthalone skeleton-containing chromatic colorants may include those compounds having

a skeleton represented by the following general formula (11). The quinophthalone skeleton-containing chromatic colorants may be usually in the form of either a pigment or a dye.

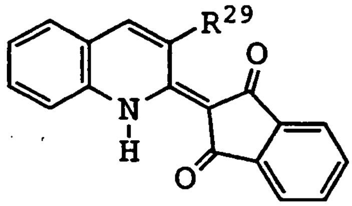

(11)

The colorant containing the above skeleton may be a compound which may or may not contain a substituent group. The structure of the substituent group-containing compound is represented by the following general formula (12):

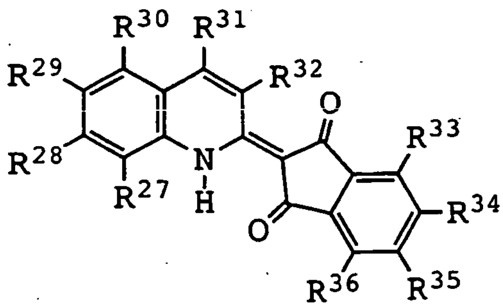

(12)

wherein $R^{27}$ to $R^{30}$ are each independently a hydrogen atom, a halogen atom, an alkyl group having 1 to 12 carbon atoms, an alkoxy group having 1 to 12 carbon atoms or a ring structure-containing group; $R^{31}$ is a hydrogen atom, a halogen atom, an alkoxy group having 1 to 12 carbon atoms, an aryloxy group having 5 to 12 carbon atoms, a heteroaryloxy group having 1 to 12 carbon atoms, an alkylthio group having 1 to 12 carbon atoms, an arylthio group having 5 to 12 carbon atoms or a heteroarylthio group having 1 to 12 carbon atoms ; $R^{32}$ is a hydrogen atom or a hydroxyl group; $R^{33}$ to $R^{36}$ are each independently a hydrogen atom, a halogen atom, a carboxyl group, an alkyl group having 1 to 12 carbon atoms, an alkoxy group having 1 to 12 carbon atoms or -COOR$^1$ or -CONR$^1$ (wherein $R^1$ is an alkyl group having 1 to 12 carbon atoms or a (hetero)aryl group having 12 or less carbon atoms); and $R^{28}$ and $R^{29}$, $R^{31}$ and $R^{32}$, $R^{33}$ and $R^{34}$, $R^{34}$ and $R^{35}$, and $R^{35}$ and $R^{36}$ may be respectively bonded to each other to form a ring.

In the above general formula (12), when $R^{27}$ to $R^{30}$ are each a group having a ring structure, examples of such a group may include substituent groups represented by the following general formula (13):

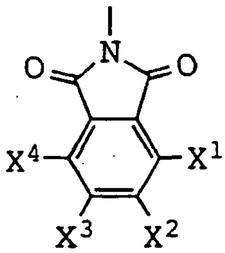

(13)

wherein $X^1$ to $X^4$ are each independently a hydrogen atom or a halogen atom.

The stricture of the colorant represented by the above general formula (12) in which $R^{27}$ is the substituent group represented by the above general formula (13), is represented by the following general formula (14):

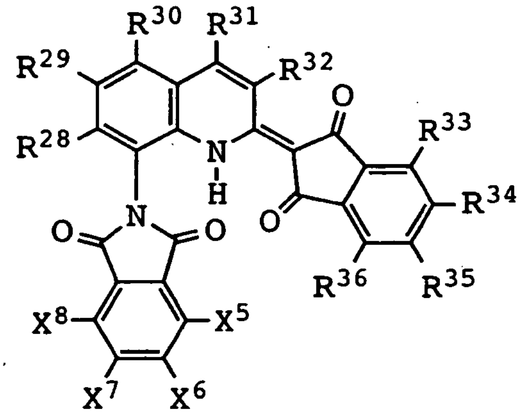

(14)

wherein $R^{28}$ to $R^{36}$ are the same as defined above; and $X^5$ to $X^8$ are each independently a hydrogen atom or a halogen atom.

Among the quinophthalone skeleton-containing chromatic colorants represented by the above general formula (14), preferred are those compounds of the general formula (14) in which $R^{28}$ to $R^{30}$ are each a hydrogen atom, a halogen atom, an alkyl group having 1 to 12 carbon atoms or an alkoxy group having 1 to 12 carbon atoms; $R^{31}$ and $R^{32}$ are each a hydrogen atom; and $R^{33}$ to $R^{36}$ are each a halogen atom, and more preferred are those compounds of the general formula (14) in which $R^{28}$ and $R^{29}$ are each a hydrogen atom or a halogen atom; $R^{30}$ to $R^{32}$ are each a hydrogen atom; $R^{33}$ to $R^{36}$ are each a halogen atom; and $X^5$ to $X^8$ are each a halogen atom. These colorants may be usually in the form of a pigment. Of these colorants, especially preferred are compounds of the general formula (14) in which $R^{28}$ and $R^{29}$ are each a hydrogen atom; $R^{30}$ to $R^{32}$ are each a hydrogen atom; $R^{33}$ to $R^{36}$ ($X^9$ to $X^{12}$) are each a halogen atom; and $X^5$ to $X^8$ are each a halogen atom (refer to the following general formula (15)).

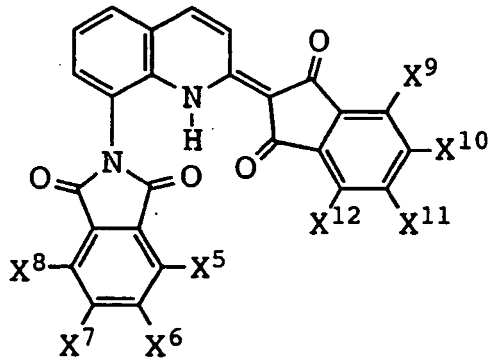

(15)

wherein $X^5$ to $X^{12}$ are each independently a halogen atom.

Meanwhile, the compounds of the general formula (12) in which $R^{27}$ and $R^{30}$ are each a hydrogen atom; and $R^{28}$ and $R^{29}$ are each independently a halogen atom, an alkyl group having 1 to 12 carbon atoms or an alkoxy group having 1 to 12 carbon atoms (refer to the following general formula (16) ) are usually in the form of a dye.

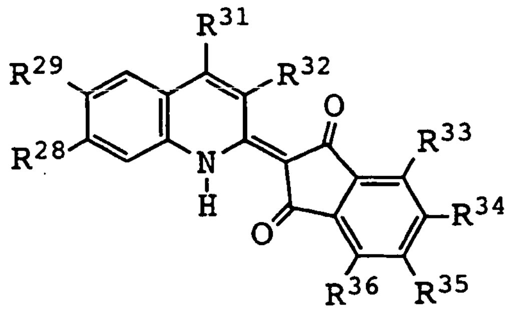

(16)

wherein $R^{28}$ and $R^{29}$ are each independently a halogen atom, an alkyl group having 1 to 12 carbon atoms or an alkoxy group having 1 to 12 carbon atoms; $R^{31}$ is a hydrogen atom, a halogen atom, an alkoxy group having 1 to 12 carbon

atoms, an aryloxy group having 5 to 12 carbon atoms, a heteroaryloxy group having 1 to 12 carbon atoms, an alkylthio group having 1 to 12 carbon atoms, an arylthio group having 5 to 12 carbon atoms or a heteroarylthio group having 1 to 12 carbon atoms; $R^{32}$ is a hydrogen atom or a hydroxyl group; $R^{33}$ to $R^{36}$ are each independently a hydrogen atom, a halogen atom, a carboxyl group, an alkyl group having 1 to 12 carbon atoms, an alkoxy group having 1 to 12 carbon atoms or- $COOR^1$ or- $CONR^1$ (wherein $R^1$ is an alkyl group having 1 to 12 carbon atoms or a (hetero) aryl group having 12 or less carbon atoms) ; and $R^{28}$ and $R^{29}$, $R^{31}$ and $R^{32}$, $R^{33}$ and $R^{34}$, $R^{34}$ and $R^{35}$, and $R^{35}$ and $R^{36}$ may be respectively bonded to each other to form a ring.

1-6. Anthraquinone skeleton-containing chromatic colorants:

Examples of the anthraquinone skeleton-containing chromatic colorants may include those compounds having a skeleton represented by the following formula (17). These colorants may be in the form of a compound having only one skeleton of the general formula (17) or a compound having two or more skeletons of the general formula (17).

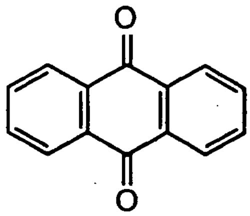

(17)

Among these colorants, preferred are compounds represented by the following general formula (18), compounds having a plurality of the above skeletons of the general formula (17), and compounds containing an amino group, and more preferred are compounds containing two anthraquinone skeletons and two amino groups. The compounds represented by the following general formula (18) are usually in the form of a yellow to blue-colored dye.

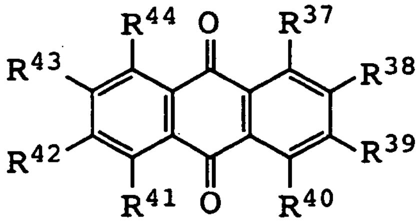

(18)

wherein $R^{37}$ to $R^{44}$ are each independently a hydrogen atom, a halogen atom, an amino group, a hydroxyl group, an alkyl group having 1 to 12 carbon atoms, an alkoxy group having 1 to 12 carbon atoms, an aryl group having 5 to 12 carbon atoms, a heteroaryl group having 1 to 12 carbon atoms, $-NHR^1$, $-NR^1$, $-OR^1$, $-SR^1$, $-COOR^1$ or $-NHCOR^1$ (wherein $R^1$ is an alkyl group having 1 to 12 carbon atoms or a (hetero)aryl group having 12 or less carbon atoms).

Examples of the compounds containing two anthraquinone skeletons and two amino groups may include those compounds represented by the following general formula (19) and the following structural formula (20). These compounds are usually in the form of a blue pigment.

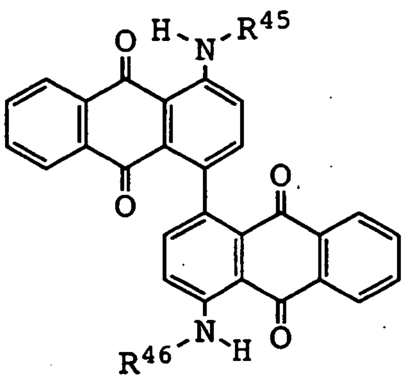

(19)

wherein $R^{45}$ and $R^{46}$ are each independently a hydrogen atom, an alkyl group having 1 to 12 carbon atoms, an aryl

group having 5 to 12 carbon atoms, a heteroaryl group having 1 to 12 carbon atoms, an alkylcarbonyl group having 2 to 13 carbon atoms, an arylcarbonyl group having 6 to 13 carbon atoms or a heteroarylcarbonyl group having 2 to 13 carbon atoms.

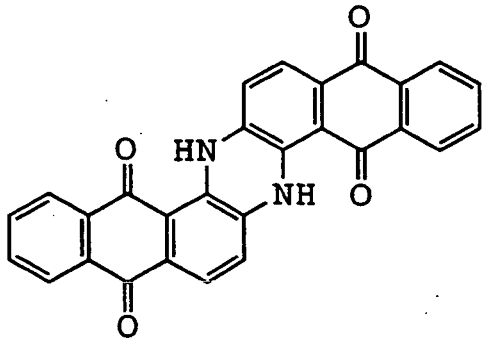

(20)

Meanwhile, in the compounds represented by the structural formula (20), hydrogen atoms bonded to each aromatic ring may be substituted with a halogen atom, etc.

1-7. Perylene skeleton-containing chromatic colorant:

Examples of the perylene skeleton-containing chromatic colorants may include those compounds represented by the following general formula (21). These colorants are usually in the form of a pigment.

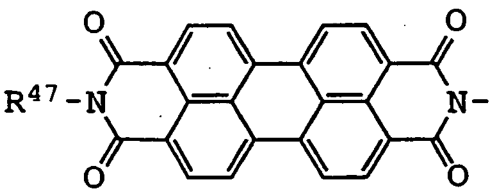

(21)

wherein $R^{47}$ and $R^{48}$ are each independently a hydrogen atom, an alkyl group having 1 to 12 carbon atoms, an aryl group having 5 to 12 carbon atoms, a heteroaryl group having 1 to 12 carbon atoms, $-COR^1$ or $-COOR^1$ (wherein $R^1$ is an alkyl group having 1 to 12 carbon atoms or a (hetero)aryl group having 12 or less carbon atoms).

Among the perylene skeleton-containing chromatic colorants represented by the above general formula (21), preferred are those colorants of the general formula (21) in which $R^{47}$ and $R^{48}$ are each an alkyl group having 1 to 12 carbon atoms, and more preferred are those colorants of the general formula (21) in which $R^{47}$ and $R^{48}$ are each an alkyl group having 1 to 3 carbon atoms.

1-8. Metal complex skeleton-containing chromatic colorants:

Examples of the metal complex skeleton-containing chromatic colorant may include those compounds in which metal ions are coordinated to an organic pigment skeleton. As the organic pigment skeleton, there are exemplified those skeletons containing an azo group, an azomethine group, etc., in which an ortho- or peri-position of the azo group or the azomethine group may be substituted with a hydroxyl group, an amino group, an imino group, etc. Examples of the metal ions may include a copper ion, a nickel ion, a cobalt ion, a zinc ion, etc.

2. Black substance for multicolor developing laser marking:

The black substance used in the present invention is not particularly limited as long as it is capable of being dissipated or discolored upon exposure to a laser light. More specifically, there may be used any black substances which allow a laser-irradiated portion of the laminate according to the present invention to exhibit a color strongly influenced by substances other than the black substance owing to dissipation, discoloration, etc., of the black substance itself by energy of the laser light. Meanwhile, the term "dissipation" of the above black substance means that the black substance is no longer present due to vaporization, volatilization or decomposition thereof, whereas the term "discoloration" of the black substance means that at least a part or a whole of the black substance exhibits a color (preferably a white color)

different from that of the black substance before exposure to a laser light owing to decomposition, etc., for example, means the color change from a black color to a light blue color or a white color. Also, the "black color" of the black substance means a dark color including a black color, and includes, for example, black-based colors such as reddish black-based colors (brownish black-based colors), greenish black-based colors, bluish black-based colors, violet black-based colors and grayish black-based colors.

The above black substance preferably exhibits such a discoloration characteristic that when a black test specimen, for example, comprising 100 parts by weight of poly(methyl methacrylate) and only 0.1 part by weight of the black substance is irradiated with a laser light having an output power of 31 A, a frequency of 55 kHz and a wavelength of 1,064 nm using "RSM30D Model" manufactured by Rofin Berzel Inc., the irradiated portions are disclosed into a white color or a color other than black.

The black substance may be either an inorganic substance or an organic substance, and may also be in the form of either a pigment or a dye. Further, the black substance may contain other components, minerals, etc., which do not belong to these substances, unless the inclusion thereof adversely affects the excellent effects of the present invention. These black substances may be used alone or in combination of any two or more thereof. Examples of the black substance may include inorganic pigments such as carbon black, titanium black and black iron oxide, graphite, activated carbon, etc. Among these black substances, preferred are those containing as a main component, a substance capable of being readily foamed when irradiated with a laser light as described below, such as carbon black, titanium black and black iron oxide, and more preferred are those containing carbon black as a main component.

Examples of the carbon black may include acetylene black, channel black, furnace black, etc. The lower limit of the average particle diameter of the carbon black is preferably 0.1 nm, more preferably 1 nm, still more preferably 5 nm and most preferably 10 nm, and the upper limit of the average particle diameter of the carbon black is preferably 1,000 nm, more preferably 500 nm, still more preferably 100 nm and most preferably 80 nm. The lower limit of the nitrogen-adsorption specific surface area of the carbon black is preferably 1 $m^2/g$, more preferably 5 $m^2/g$, still more preferably 10 $m^2/g$ and most preferably 20 $m^2/g$, and the upper limit of the specific surface area of the carbon black is preferably 10,000 $m^2/g$, more preferably 5,000 $m^2/g$, still more preferably 2,000 $m^2/g$ and most preferably 1,500 $m^2/g$.

It is known that when the multi-color developing laser marking thermoplastic polymer composition (a) used in the present invention which contains carbon black is irradiated with a laser light, the carbon black absorbs the laser light and is vaporized. When the carbon black is vaporized and removed from the composition, the laser-irradiated portion of the composition undergoes a less or no influence of the color derived from the carbon black (black or dark color), so that the color influenced by other components than the carbon black which are contained in the multi-color developing laser marking thermoplastic polymer composition (a) is strongly exhibited, namely the composition undergoes development of the color derived from the chromatic colorant.

The titanium black is generally obtained by subjecting titanium dioxide to reduction reaction. The lower limit of the average particle diameter of the titanium black is preferably 0.01 μm, more preferably 0.05 μm and still more preferably 0.1 μm, and the upper limit of the average particle diameter of the titanium black is preferably 2 μm, more preferably 1.5 μm, still more preferably 1.0 μm and most preferably 0.8 μm.

It is known that the titanium black is converted into white titanium dioxide when irradiated with a laser light. Therefore, similarly to the case where the composition containing carbon black is irradiated with a laser light, the laser-irradiated portion of the composition containing the titanium black exhibits a less or no blackness, so that the composition undergoes development of the color derived from the chromatic pigment.

Also, the black iron oxide is generally an oxide of iron represented by the formula: $Fe_3O_4$ or $FeO{\cdot}Fe_2O_3$. The lower limit of the average particle diameter of the black iron oxide is preferably 0.01 μm, more preferably 0.05 μm, still more preferably 0.1 μm and most preferably 0.3 μm, and the upper limit of the average particle diameter of the black iron oxide is preferably 2 μm, more preferably 1.5 μm, still more preferably 1.0 μm and most preferably 0.8 μm.

It is known that the color of the black iron oxide is converted into reddish white color when irradiated with a laser light. Therefore, similarly to the case where the composition containing carbon black or titanium black is irradiated with a laser light, the laser-irradiated portion of the composition containing the black iron oxide exhibits a less or no blackness, so that the composition undergoes development of the color derived from the chromatic colorant.

<u>3. Multi-color developing laser marking polymer:</u>

Any polymers may be used as the above polymer unless they disturb multi-color development of the composition when irradiated with a laser light.

In the present invention thermoplastic resins such as (1) rubber-reinforced thermoplastic resins produced by using methyl methacrylate as a monomer component, (2) acrylic resins such as polymethyl methacrylate, and copolymers containing a methyl methacrylate monomer unit in an amount of not less than 30% by weight, (3) polyacetal resins and (4) polyamide resins are used from the standpoint of a good foamability.

The rubber-reinforced thermoplastic resins suitably used in the present invention suitably comprises a rubber-reinforced copolymer resin (A1) obtained by polymerizing a vinyl-based monomer (b1) in the presence of a rubber polymer (a), or a mixture of the rubber-reinforced copolymer resin (A1) and a (co)polymer (A2) of a vinyl-based monomer (b2) in which the rubber-reinforced copolymer resin (A1) or the above mixture contains a (meth)acrylic ester monomer unit in an amount of preferably not less than 30% by weight, more preferably not less than 40% by weight and still more preferably not less than 50% by weight on the basis of the total weight of the components other than the rubber polymer (a). When the content of the (meth)acrylic ester monomer unit in the resin (A1) or the mixture is out of the above-specified range, it may be difficult to attain clear markings.

The (meth)acrylic ester is methyl methacrylate.

Examples of the rubber polymer (a) may include polymers such as polybutadiene, butadiene/styrene copolymers, butadiene/acrylonitrile copolymers, styrene/butadiene/styrene block copolymers, styrene/isoprene/styrene block copolymers and isobutylene/isoprene copolymers; hydrogenated products of these polymers; butyl rubbers; ethylene/$\alpha$-olefin copolymers; ethylene/$\alpha$-olefin/non-conjugated diene copolymers; silicone-based rubbers; and acrylic rubbers. These rubber polymers may be used alone or in combination of any two or more thereof.

The vinyl-based monomer (b1) used for forming the above rubber-reinforced copolymer resin (A1) may contains, in addition to the (meth)acrylic ester, an aromatic vinyl compound, a cyanided vinyl compound, a maleimide-based compound, etc. Also, a vinyl-based compound containing a functional group such as an epoxy group, a hydroxyl group, a carboxyl group, an amino group and an oxazoline group may also be used as the vinyl-based monomer according to the requirements. These vinyl-based compounds may be used alone or in combination of any two or more thereof.

Examples of the vinyl-based monomer (b2) used for forming the above (co)polymer (A2) may include the above-illustrated (meth)acrylates; aromatic vinyl compounds; cyanided vinyl compounds; maleimide-based compounds; and vinyl-based compounds containing a functional group such as an epoxy group, a hydroxyl group, a carboxyl group, an amino group and an oxazoline group. These compounds may be used alone or in combination of any two or more thereof. Meanwhile, the above vinyl-based monomer (b1) and the vinyl-based monomer (b2) may contain the same monomer in the same or different amount, or may comprise different kinds of monomers.

Examples of the aromatic vinyl compound may include styrene, $\alpha$- methyl styrene, o- methyl styrene, p- methyl styrene, ethyl styrene, vinyl toluene, vinyl xylene, methyl- $\alpha$- methyl styrene, t- butyl styrene, divinyl benzene, 1, 1-diphenyl styrene, N, N- diethyl- p- aminomethyl styrene, N, N- diethyl- p- aminoethyl styrene, vinyl naphthalene, vinyl pyridine, chlorinated styrenes such as monochlorostyrene and dichlorostyrene, brominated styrenes such as monobromostyrene and dibromostyrene, and monofluorostyrene. These aromatic vinyl compounds may be used alone or in combination of any two or more thereof. Among these aromatic vinyl compounds, preferred are styrene, $\alpha$- methyl styrene and p- methyl styrene.

Examples of the cyanided vinyl compound may include acrylonitrile, methacrylonitrile and ethacrylonitrile. These cyanided vinyl compounds may be used alone or in combination of any two or more thereof. Also, among these cyanided vinyl compounds, preferred are acrylonitrile and methacrylonitrile.

Examples of the maleimide- based compound may include maleimide, N- methyl maleimide, N- butyl maleimide, N- phenyl maleimide, N- (2- methylphenyl) maleimide, N- (4- hydroxyphenyl) maleimide, N- cyclohexyl maleimide and imide compounds of $\alpha$, $\beta$- unsaturated dicarboxylic acids. These maleimide- based compounds may be used alone or in combination of any two or more thereof. Meanwhile, a unit derived from the maleimide- based compounds may be introduced into the above polymer by copolymerizing maleic anhydride with the polymer and then imidating the group introduced.

Examples of the above vinyl-based compound containing a functional group may include glycidyl methacrylate, glycidyl acrylate, 2-hydroxyethyl methacrylate, 2-hydroxyethyl acrylate, acrylic acid, methacrylic acid, N,N-dimethylaminomethyl acrylate, N,N-dimethylaminomethyl methacrylate, N,N-dimethylaminoethyl acrylate, N,N-dimethylaminoethyl methacrylate, acrylamide and vinyl oxazoline. These vinyl-based compounds may be used alone or in combination of any two or more thereof.

The amount of the vinyl-based monomer (b1) used for forming the rubber-reinforced copolymer resin (A1), and the amount of vinyl-based monomer (b2) used for forming the (co)polymer (A2) (both based on % by weight) are as follows.

(1) When using the aromatic vinyl compound as the vinyl-based monomer (b1) or (b2), the lower limit of the amount of the aromatic vinyl compound used is preferably 5% by weight, more preferably 10% by weight and still more preferably 20% by weight on the basis of the total weight of whole vinyl-based monomers, whereas the upper limit of the amount of the aromatic vinyl compound used is preferably 100% by weight and more preferably 80% by weight on the basis of the total weight of whole vinyl-based monomers.

(2) When using the cyanided vinyl compound as the vinyl-based monomer (b1) or (b2), the lower limit of the amount of the cyanided vinyl compound used is preferably 1% by weight, more preferably 3% by weight and still more preferably 5% by weight on the basis of the total weight of whole vinyl-based monomers, whereas the upper limit of the amount of the cyanided vinyl compound used is preferably 50% by weight, more preferably 40% by weight and still more preferably 35% by weight on the basis of the total weight of whole vinyl-based monomers.

(3) When using the (meth)acrylic ester as the vinyl-based monomer (b1) or (b2), the lower limit of the amount of the (meth)acrylic ester used is preferably 1% by weight and more preferably 5% by weight on the basis of the total weight of whole vinyl-based monomers, whereas the upper limit of the amount of the (meth)acrylic ester used is preferably 100% by weight, more preferably 95% by weight and still more preferably 90% by weight on the basis of the total weight of whole vinyl-based monomers.
(4) When using the maleimide-based compound as the vinyl-based monomer (b1) or (b2), the lower limit of the amount of the maleimide-based compound used is preferably 1% by weight and more preferably 5% by weight on the basis of the total weight of whole vinyl-based monomers, whereas the upper limit of the amount of the maleimide-based compound used is preferably 70% by weight, more preferably 60% by weight and still more preferably 55% by weight on the basis of the total weight of whole vinyl-based monomers.
(5) When using the functional group-containing vinyl-based compound as the vinyl-based monomer (b1) or (b2), the lower limit of the amount of the functional group-containing vinyl-based compound used is preferably 0.1% by weight, more preferably 0.5% by weight and still more preferably 1% by weight on the basis of the total weight of whole vinyl-based monomers, whereas the upper limit of the amount of the functional group-containing vinyl-based compound used is preferably 30% by weight and more preferably 25% by weight on the basis of the total weight of whole vinyl-based monomers. When the amount of the vinyl-based monomer used lies within the above-specified range, the effects of the monomers used can be fully exhibited.

The above rubber-reinforced copolymer resin (A1) may be produced by polymerizing the vinyl-based monomer (b1) in the presence of the rubber polymer (a) by an emulsion polymerization method, a solution polymerization method, a bulk polymerization method, etc. Among these methods, preferred is an emulsion polymerization method. When producing the copolymer resin (A1) by an emulsion polymerization method, there may be used a polymerization initiator, a chain transfer agent (molecular weight controller), an emulsifier, water, etc.

The method of using the vinyl-based monomer (b1) upon emulsion-polymerizing the vinyl-based monomer (b1) in the presence of the rubber polymer (a) is usually as described below. However, in the present invention, the method of using the vinyl-based monomer (b1) upon emulsion-polymerizing the vinyl-based monomer (b1) in the presence of the rubber polymer (a) is not particularly limited to the below-mentioned method. Meanwhile, in the reaction system, the vinyl-based monomer (b1) may be added thereto in a whole amount at one time, or intermittently in separate parts or continuously, in the presence of a whole amount of the rubber polymer (a). Alternatively, a whole or partial amount of the rubber polymer (a) may be added in the course of the polymerization process.

Examples of the polymerization initiator may include redox-based polymerization initiators prepared by using organic hydroperoxides such as typically cumene hydroperoxide, diisopropylbenzene hydroperoxide and p-menthan hydroperoxide in combination with a reducing agent such as typically sugar-containing pyrophosphoric acid compounds and sulfoxylate compounds; persulfates such as potassium persulfate; and peroxides such as benzoyl peroxide (BPO), lauroyl peroxide, t-butyl peroxylaurate and t-butyl peroxymonocarbonate. These polymerization initiators may be used alone or in combination of any two or more thereof. Further, the polymerization initiator may be added to the reaction system at one time or continuously. Meanwhile, the amount of the polymerization initiator used is usually 0.1 to 1.5% by weight and preferably 0.2 to 0.7% by weight on the basis of the whole amount of the above vinyl-based monomer (b1).

Examples of the chain transfer agent may include mercaptans such as octyl mercaptan, n-dodecyl mercaptan, t-dodecyl mercaptan, n-hexyl mercaptan, n-hexadecyl mercaptan, n-tetradecyl mercaptan and t-tetradecyl mercaptan; terpinolene; and dimers of $\alpha$-methyl styrene. These chain transfer agents may be used alone or in combination of any two or more thereof. The amount of the chain transfer agent used is usually 0.05 to 2.0% by weight on the basis of the whole amount of the above vinyl-based monomer (b1).

Examples of the emulsifier used may include sulfuric acid esters of higher alcohols; alkylbenzenesulfonic acid salts such as sodium dodecylbenzenesulfonate; aliphatic sulfonic acid salts such as sodium laurylsulfate; higher aliphatic carboxylates; anionic surfactants such as rosinates; and nonionic surfactants such as alkyl esters or alkyl ethers of polyethylene glycol. These emulsifiers may be used alone or in combination of any two or more thereof. The amount of the emulsifier used is usually 0.3 to 5.0% by weight on the basis of the whole amount of the above vinyl-based monomer (b1).

The latex obtained by the emulsion polymerization is usually solidified with a coagulating agent to form particles of the polymer component. Thereafter, the polymer particles were washed with water and then dried to produce a purified product. Examples of the coagulating agent may include inorganic salts such as calcium chloride, magnesium sulfate, magnesium chloride and sodium chloride; inorganic acids such as sulfuric acid and hydrochloric acid; and organic acids such as acetic acid and lactic acid. The production process using a solution polymerization method or a bulk polymerization method may be conducted by conventionally known methods.

The graft percentage of the graft polymer contained in the above rubber-reinforced copolymer resin (A1) (weight percentage of the vinyl-based monomer (b1) grafted to the rubber polymer (a)) is preferably 10 to 200%, more preferably 15 to 150% and still more preferably 20 to 100%. When the graft percentage of the graft polymer is too low, the resultant

resin composition tends to be deteriorated in impact resistance. When the graft percentage of the graft polymer is too high, the resultant resin composition tends to be deteriorated in processability.

The graft percentage used herein means the value calculated from the following formula:

$$\text{Graft Percentage (\%)} = \{(y - x)/x\} \times 100$$

wherein x is a weight (g) of a rubber component contained in 1 g of the rubber-reinforced copolymer resin (A1); and y is a weight (g) of an insoluble component obtained upon dissolving 1 g of the rubber-reinforced copolymer resin (A1) in acetone (when an acrylic rubber is used as the rubber polymer (a), acetonitrile is used as the solvent).

Meanwhile, the graft percentage may be readily controlled by varying kinds and amounts of the polymerization initiator, chain transfer agent, emulsifier, solvent, etc., which are used upon production of the rubber- reinforced copolymer resin (A1), as well as the polymerization time, polymerization temperature, etc.

The above (co)polymer (A2) may be produced, for example, by a bulk polymerization method, a solution polymerization method, an emulsion polymerization method, a suspension polymerization method, etc.

The intrinsic viscosity [η] of an acetone-soluble component in the above (co)polymer (A2) as measured at 30°C in methyl ethyl ketone is preferably 0.1 to 1.0 dL/g and more preferably 0.15 to 0.7 dL/g from the standpoint of a good balance between a moldability and an impact resistance of the resultant resin composition. The intrinsic viscosity [η] may be controlled by suitably adjusting conditions of the production process similarly to the above rubber-reinforced copolymer resin (A1). In addition, the intrinsic viscosity [η] of an acetone-soluble component in the above rubber-reinforced thermoplastic resin as measured at 30°C in methyl ethyl ketone is preferably 0.1 to 0.8 dL/g and more preferably 0.15 to 0.7 dL/g from the standpoint of a good balance between a moldability and an impact resistance of the resultant resin composition.

The rubber-reinforced thermoplastic resins (1) to (4) used in the present invention are shown below.

(1) Rubber-reinforced copolymer resin obtained by polymerizing a monomer containing methyl methacrylate in the presence of the rubber polymer.

(2) Rubber-reinforced thermoplastic resin comprising combination of the above rubber-reinforced copolymer resin (1) and a (co)polymer obtained by polymerizing a monomer containing methyl methacrylate.

(3) Rubber-reinforced thermoplastic resin comprising combination of the above rubber-reinforced copolymer resin (1) and a (co)polymer obtained by polymerizing a monomer containing an aromatic vinyl compound and a cyanided vinyl compound.

(4) Rubber-reinforced thermoplastic resin comprising combination of a rubber-reinforced copolymer resin obtained by polymerizing a monomer containing an aromatic vinyl compound and a cyanided vinyl compound in the presence of the rubber polymer without using methyl methacrylate, and a (co)polymer obtained by polymerizing a monomer containing methyl methacrylate.

The polymer of the present invention which contains the above rubber-reinforced thermoplastic resin as a main component can provide a composition capable of producing a molded product having an excellent impact resistance. In the case where the polymer of the present invention contains the above rubber-reinforced thermoplastic resin, the lower limit of the content of the rubber polymer (a) in the polymer is preferably 0.5% by weight, more preferably 1% by weight, still more preferably 3% by weight and especially preferably 5% by weight, whereas the upper limit of the content of the rubber polymer (a) is preferably 60% by weight, more preferably 40% by weight and still more preferably 35% by weight. When the content of the rubber polymer (a) is too small, the resultant molded product tends to be deteriorated in impact resistance. When the content of the rubber polymer (a) is too large, the resultant molded product tends to be deteriorated in hardness and rigidity.

The thermoplastic resins as the polymer of the present invention may be used alone or in combination with the other polymer. Examples of the other polymer may include thermoplastic resins such as polycarbonate resins, polyester-based resins and polyamide-based resins; thermosetting resins such as acrylic resins (including acrylic polymers containing an epoxy group), epoxy resins, phenol-based resins, unsaturated polyester-based resins, alkyd resins, melamine resins, urethane resins and urea resins. These other polymers may be used alone or in combination of any two or more thereof.

Also, in the present invention, as the acrylic resins, there are preferably used (co) polymers obtained from a monomer containing a (meth) acrylic ester. The (meth) acrylic ester preferably contains the (meth) acrylic ester used for producing the above rubber- reinforced thermoplastic resin. Examples of the other monomers contained in the acrylic resin may include aromatic vinyl compounds; cyanided vinyl compounds; maleimide- based compounds; and vinyl-based compounds containing a functional group such as an epoxy group, a hydroxyl group, a carboxyl group, an amino

group and an oxazoline group. Therefore, as the above acrylic resins, more preferred are resins obtained from a monomer containing methyl methacrylate, more specifically, (co) polymers containing a methyl methacrylate unit in an amount of not less than 30% by weight, poly (methyl methacrylate) (PMMA), etc.

Further, as the acrylic resin, there may also be suitably used a copolymer produced from 30 to 80% by weight of methyl methacrylate, 20 to 50% by weight of a (meth) acrylic ester other than methyl methacrylate and 0 to 50% by weight of the other vinyl- based monomer. Examples of such a copolymer may include a methyl methacrylate/ butyl acrylate/ styrene- based soft copolymer "PARAPELLET SA- N (tradename) " as a commercially available product produced by Kuraray Co., Ltd., etc.

The weight-average molecular weight of the above acrylic resin as measured in terms of polystyrene by gel permeation chromatography (GPC) is not particularly limited, and is preferably 50,000 to 500,000, more preferably 70,000 to 400,000 and still more preferably 80,000 to 300,000.

Also, the polyacetal resin suitably used in the present invention is not particularly limited as long as the resin is a polymer compound containing an oxymethylene group (- $CH_2O$- ) as a main constitutional unit. The polyacetal resin may be in the form of either a polyoxymethylene homopolymer, or a copolymer (including a block copolymer) or a terpolymer containing the other constitutional unit in addition to the oxymethylene group. Further, the molecular structure of the polyacetal resin may be not only a linear structure but also a branched structure and a crosslinked structure. In addition, the polyacetal resin may contain a functional group such as a carboxyl group and a hydroxyl group. Furthermore, the polyacetal resins may be used alone or in combination of any two or more thereof.

The polyamide resin suitably used in the present invention is not particularly limited as long as the resin is a polymer compound containing an acid amide bond (-CO-NH) in a main chain thereof.

Examples of the polyamide resin may include nylons 4, 6, 7, 8, 11, 12, 6.6, 6.9, 6.10, 6.11, 6.12, 6T, 6/6.6, 6/12, 6/6T and 6T/6I. Meanwhile, the terminal end of the polyamide resins may be sealed with a carboxylic acid, an amine, etc. These polyamide resins may be used alone or in combination of any two or more thereof.

The polyurethane resin suitably used in the present invention is not particularly limited as long as the resin is a polymer compound containing an urethane bond (-NH-COO-) in a main chain thereof. The polyurethane resin may be usually produced by reacting a diol with a diisocyanate.

Meanwhile, as described above, the thermoplastic polymer may be used in combination with the thermosetting polymer as the polymer for laser marking according to the present invention. In this case, the lower limit of the content of the thermosetting polymer is preferably 0.01 part by weight, more preferably 0.05 part by weight and still more preferably 0.1 part by weight on the basis of 100 parts by weight of the thermoplastic polymer, whereas the upper limit of the content of the thermosetting polymer is preferably 20 parts by weight, more preferably 10 parts by weight and still more preferably 5 parts by weight on the basis of 100 parts by weight of the thermoplastic polymer. When the content of the thermosetting polymer in the polymer for laser marking lies within the above- specified range, the obtained laser- marking portions are free from discoloration (including fading) and maintain clear color development for a long period of time, resulting in stable shape of the laser- marking portions. Meanwhile, when the thermoplastic polymer and the thermosetting polymer are used in combination with each other, the thermosetting polymer may be contained in a coupled state or may be dispersed in the form of pieces such as particles, in the multi- color developing laser marking thermoplastic polymer composition (a) used in the present invention.

4. Multi-color developing laser marking thermoplastic polymer composition:

The multi-color developing laser marking resin composition (a) used in the present invention contains the above chromatic colorant, black substance and polymer in the respective specific amounts, and when irradiating two or more laser lights having different energies from each other to the composition, markings having two or more different color tones are produced thereon.

In order to obtain clear markings, the contents of the above respective components in the multi-color developing laser marking thermoplastic polymer composition (a) used in the present invention are controlled to the following ranges. That is, the content of the chromatic colorant is 0.001 to 3 parts by weight, and the content of the black substance is 0.01 to 2 parts by weight, both on the basis of 100 parts by weight of the polymer. The lower limit of the content of the chromatic colorant is preferably 0.002 part by weight and more preferably 0.005 part by weight, and the upper limit of the content of the chromatic colorant is preferably 1 part by weight and more preferably 0.8 part by weight. When the content of the chromatic colorant is too large, it may be difficult to obtain white markings, i.e., when irradiating a high-energy laser light to the composition, portions irradiated with the high-energy laser light tend to be hardly distinguished from those portions irradiated with a low-energy laser light. On the other hand, when the content of the chromatic colorant is too small, it may be difficult to obtain markings having the color derived from the chromatic colorant, i.e., portions irradiated with the low-energy laser light tend to be hardly distinguished from unirradiated portions.

The lower limit of the content of the black substance is preferably 0.03 part by weight and more preferably 0.05 part by weight, and the upper limit of the content of the black substance is preferably 1 part by weight and more preferably

0.8 part by weight. When the content of the black substance is too large, the laser-irradiated portions tend to be colored too blackish, so that it may be difficult to distinguish the markings obtained by the laser irradiation from the surrounding portions. Meanwhile, when a curable polymer is used as the above polymer, the raw components are formulated such that "the polymer obtained after curing is present in an amount of 100 parts by weight".

The background color of the multi-color developing laser marking thermoplastic polymer composition (a) used in the present invention is either a black color or a dark color because the chromatic colorant, the black substance, etc., are dispersed in the above polymer. In the present invention, when a white-based substance such as a white substance is contained in the composition, a lightness of the background color of the composition can be suitably controlled, and a whiteness of the colors developed by the laser marking can be enhanced. In the latter case, for example, the whiteness of a white color or a faded color owing to decrease in density of the color derived from the chromatic colorant used in the present invention which colors are developed by irradiation with a laser light can be enhanced.

The above white-based substance may be any white substance unless the inclusion thereof considerably disturbs the effect of exhibiting the excellent multi-color developing laser marking performance according to the present invention, for example, unless the white-based substance makes it very difficult to distinguish markings obtained according to the present invention. Examples of the white-based substance may include titanium dioxide, zinc oxide, zinc sulfide, barium sulfate, etc. These white-based substances may be used alone or in combination of any two or more thereof.

The average particle diameter of the above white-based substance is not particularly limited, and is usually 0.1 to 3.0 μm, more preferably 0.1 to 2.0 μm and still more preferably 0.1 to 1.0 μm. The content of the white-based substance is preferably 0.001 to 1 part by weight, more preferably 0.001 to 0.5 part by weight and still more preferably 0.001 to 0.1 part by weight on the basis of 100 parts by weight of the above polymer. When the content of the white-based substance is too large, it may be difficult to obtain markings having a good contrast. On the other hand, when the content of the white-based substance is too small, the freedom of the background color of the resultant molded product tends to be restricted.

The multi-color developing laser marking thermoplastic polymer composition (a) used in the present invention may also contain, if required, various additives such as ultraviolet absorbers, antioxidants, anti-aging agents, antistatic agents, flame retardants, weather-resisting agents, plasticizers, fillers, lubricants, anti-fungus agents, hydrophilicity-imparting agents, decorative materials and light color-based colorants according to the objects and applications thereof. In particular, when the composition contains the antistatic agents, flame retardants, fillers, anti-fungus agents, decorative materials, etc., in desired amounts, it is possible to not only obtain clearly color-developed markings, but also produce a molded product exhibiting and maintaining desired functions at a higher level.

The multi-color developing laser marking thermoplastic polymer composition (a) used in the present invention can be produced, for example, by charging the above respective components into various extruders, Banbury mixer, kneader, rolls, etc., and kneading these components together therein. Upon kneading, the respective components may be added at one time or may be intermittently added in multiple stages.

Meanwhile, when the above (rubber- reinforced) acrylic thermoplastic resin composition contains a polycarbonate resin, the composition necessarily exhibits a peculiar nacreous or iridescent luster owing to the difference in refractive index between the acrylic resin and the polycarbonate resin. Such a nacreous or iridescent luster is undesirable for developing a white color on a black matrix color. In the present invention, in order to prevent occurrence of the nacreous or iridescent luster, it is recommended that the phosphate- based compound (C) as described in Japanese Patent Application No. 2004- 267602 is used as a compatilizing agent between the polycarbonate resin (A) and the acrylic resin (B) .

The above "phosphate-based compound (C)" may include the following compounds (C-1) and/or (C-2).

Table 1

(C-1): Compound containing an aromatic group and an ester bond-containing group;
(C-2): Combination of a compound (C-2a) containing an aromatic group and a compound (C-2b) containing an ester bond-containing group.

<Transparent thermoplastic resin (b)>

The resin used as the transparent thermoplastic resin (b) is not particularly limited as long as the light transmittance of the resin in the form of a single layer used in the laminate is not less than 70%. Examples of the suitable transparent thermoplastic resin may include polyester resins, (methyl) methacrylate resins, polycarbonate resins, polyolefin resins, etc. Among these resins, preferred are polyester resins.

The light transmittance may be measured using a spectrophotometer "V-570" manufactured by Nippon Bunko Co., Ltd., by irradiating a light having a wavelength of 200 to 1,100 nm. In the present invention, the "light transmittance of not less than 70%" means that the light transmittance as measured by a light having at least one wavelength within the above-specified range is not less than 70%. The light transmittance of the transparent thermoplastic resin is preferably not less than 80% and more preferably not less than 90%. When the light transmittance of the transparent thermoplastic resin is less than 70%, the color development by the laser marking tends to be deteriorated.

The polyester resin preferably contains a terephthalic acid component in an amount of not less than 50 mol% based on whole dicarboxylic acid components contained in the resin, and an ethylene glycol component in an amount of not less than 50 mol% based on whole diol components contained in the resin.

Examples of the dicarboxylic acid components other than the terephthalic acid component may include aromatic dicarboxylic acids such as phthalic acid, isophthalic acid, 4,4'-diphenyldicarboxylic acid, 4,4'-diphenoxyethanedicarboxylic acid, 4,4'-diphenyletherdicarboxylic acid, 4,4'-diphenylsulfonedicarboxylic acid and 2,6-naphthalenedicarboxylic acid; alicyclic dicarboxylic acids such as hexahydroterephthalic acid and hexahydroisophthalic acid; and aliphatic dicarboxylic acids such as malonic acid, succinic acid, adipic acid, azelaic acid, sebacic acid and diglycolic acid. These acid components may be used alone or in combination of any two or more thereof.

Examples of the other diol components other than the ethylene glycol component may include aliphatic diols such as propylene glycol, trimethylene glycol, tetramethylene glycol, pentamethylene glycol, hexamethylene glycol, decamethylene glycol, neopentyl glycol and diethylene glycol; alicyclic diols such as 1, 2- cyclohexane diol, 1, 2- cyclohexane dimethanol, 1, 3- cyclohexane dimethanol and 1, 4- cyclohexane dimethanol; and aromatic diols such as pyrocatechol, resorcinol, hydroquinone, 4, 4'- dihydroxybiphenyl, 2, 2- bis (4'- hydroxyphenyl) propane, 2, 2- bis (4'- β-hydroxyethoxyphenyl) propane, bis (4- hydroxyphenyl) sulfone and bis (4- β- hydroxyethoxyphenyl) sulfone. These diol components may be used alone or in combination of any two or more thereof.

Further, in the polyester resin, a monofunctional component such as hydroxycarboxylic acids or alkoxycarboxylic acids, e.g., glycolic acid, p- hydroxybenzoic acid and p- β- hydroxyethoxybenzoic acid, stearic acid, stearyl alcohol, benzyl alcohol, benzoic acid, t- butyl benzoic acid and benzoyl benzoic acid, or tri- or higher polyfunctional component such as trimellitic acid, trimesic acid, pyromellitic acid, trimethylol ethane, trimethylol propane, glycerol and pentaerythritol may also be used as a comonomer component. These comonomer components may be used alone or in combination of any two or more thereof.

Among the above components, the preferred dicarboxylic acid component other than the terephthalic acid component is isophthalic acid, and the preferred diol component other than the ethylene glycol component is 1, 4-cyclohexane dimethanol (hereinafter referred to merely as "1, 4- CHDM") . Further, among these resins, especially preferred is such a polyester resin comprising a dicarboxylic acid component containing terephthalic acid as a main component and a diol component containing ethylene glycol and 1, 4- CHDM as main components in which the content of 1, 4- CHDM is 15 to 50 mol% on the basis of the whole diol components. Examples of such a polyester resin may include "EASTER PETG Copolyester 6763 (tradename) " produced by Eastman Chemical Inc. Meanwhile, the term "main component (s) " used herein means that the content of the compound (s) is not less than 85 mol% and preferably not less than 90 mol% based on the respective components.

The transparent thermoplastic resin (b) is preferably subjected to anti-blocking treatment. The anti-blocking treatment may be achieved by surface-roughening treatment using inert particles. The surface-roughening treatment using inert particles may be conducted by either the method of blending the inert particles into the transparent thermoplastic resin (b) during the process for production of the laminate or the method of applying a coating solution containing the inert particles onto the laminate and then drying the applied solution. However, the former method exhibits a more remarkable effect of improving a slip property of the laminate during the process for production of the laminate.

Examples of the inert particles may include silicon oxide, titanium oxide, zeolite, silicon nitride, boron nitride, cerite, alumina, calcium carbonate, magnesium carbonate, barium carbonate, calcium sulfate, barium sulfate, calcium phosphate, lithium phosphate, magnesium phosphate, lithium fluoride, kaolin, talc and crosslinked polymer fine particles as described in Japanese Patent Publication (KOKOKU) No. 59-5216.

The average particle diameter of the inert particles is usually 1.0 to 10 μm and preferably 2.0 to 6.0 μm. When the average particle diameter of the inert particles is less than 1.0 μm, the effect of improving a slip property of the laminate tends to be insufficient. When the average particle diameter of the inert particles is more than 10 μm, the obtained transparent thermoplastic resin layer tends to be deteriorated in transparency. The content of the inert particles in the transparent thermoplastic resin layer is usually 0.05 to 2.0% by weight, preferably 0.1 to 1.5% by weight and more preferably 0.2 to 1.0% by weight. When the content of the inert particles is less than 0.05% by weight, the effect of improving a slip property of the laminate tends to be insufficient. When the content of the inert particles is more than 2.0% by weight, the obtained transparent thermoplastic resin layer tends to be deteriorated in transparency.

The inert particles may be blended in the transparent thermoplastic resin layer by conventionally known optional methods. For example, the inert particles may be added upon polymerization of the raw monomers or may be mixed in the transparent thermoplastic resin obtained after the polymerization using a blender. Further, there may also be used

the method of mixing or blending a dilute solution of a master batch previously prepared which contains the inert particles at a high concentration, in the transparent thermoplastic resin.

The transparent thermoplastic resin layer may contain, in addition to the inert particles, various additives such as antistatic agents, stabilizers, lubricants and ultraviolet absorbers unless the addition thereof adversely affects a slip property and a transparency of the resultant laminate. Further, the surface of the transparent thermoplastic resin layer may be coated with antistatic agents or lubricants such as silicones and waxes. When applying the lubricant onto the surface of the transparent thermoplastic resin layer, in association with the surface-roughening treatment using the inert particles, a higher anti-blocking property can be imparted to the resultant laminate. More specifically, when the laminate sheets are stored in the stacked condition, blocking problems thereof can be fully solved.

An example of the suitable lubricants is dimethyl siloxane. The dimethyl siloxane is usually used in the form of an emulsion having a solid concentration of 1 to 5% by weight. The emulsion may be applied in a coating amount of 1 to 5 mL/$m^2$.

<Laminate>

The laminate for use in the present invention has a basic layer structure comprising a layer A and a layer B (A/B) in which the layer B is laminated on at least one surface of the layer A. Another layer structure of the laminate is comprising the layer B, layer A and layer B (B/A/B). In such a three layer structure, the two layers B may be formed from different kinds of transparent thermoplastic resins (b). Further, the other layer structure of the laminate includes a layer structure comprising the layer B, layer A and layer C (B/A/C) or a layer structure comprising the layer B, layer A, layer C and layer B (B/A/C/B). The layer C may be formed, for example, from a resin having an excellent light resistance, such as polymethyl methacrylate (PMMA). In the other preferred embodiment of the present invention, the laminate has a layer structure comprising the layer B, layer A and layer C (B/A/C).

The method for producing the laminate for use in the present invention is not particularly limited. The laminate may be usually produced by a co-extrusion method, for example, by feeding the respective resins previously dried by an ordinary method into separate extruders, extruding the resins into a sheet therefrom through a multi-manifold die or a feed block die at a predetermined temperature, and then cooling solidifying the extruded sheet on a casting drum whose temperature is controlled to usually 0 to 80°C and preferably 10 to 50°C to form a laminated sheet. In this case, one or more touch rolls are preferably disposed in the vicinity of the casting drum and used as a pressing roll upon forming the sheet in order to obtain a laminate having a uniform thickness. Meanwhile, when the extruder is equipped with a vent port, it is possible to omit the drying step or shorten the drying time.

The melting temperature of the multi-color developing laser marking thermoplastic polymer composition (a) is usually 200 to 260°C. The melting temperature of the transparent thermoplastic resin (b) varies depending upon kind of resin used. The polyester resin when used as the transparent thermoplastic resin (b) usually has a melting temperature of 240 to 310°C. The polycarbonate resin when used as the transparent thermoplastic resin (b) usually has a melting temperature of 280 to 320°C. The polyethylene resin when used as the transparent thermoplastic resin (b) usually has a melting temperature of 180 to 220°C. PMMA when used as the transparent thermoplastic resin (b) usually has a melting temperature of 260 to 320°C.

Also, the thicknesses of the respective layers of the laminate may be controlled by adjusting an amount of the molten resin discharged from the respective extruders. The thicknesses of the respective layers in the above layer structures varies depending upon embodiments of use of the laminate (i.e., whether the laminate is used as a film or a sheets) . The thickness of the layer A is usually from 40 μm to 50 mm, whereas the thickness of each of the layer B and the layer C is usually from 5 μm to 5 mm. The ratio of the thickness of the layer A to the whole thickness of the laminate is usually 90 to 95%.

When applying an antistatic agent or a lubricant such as silicones and waxes on the surface of the thus obtained laminate, the laminate may be treated in an anti-locking agent applying apparatus disposed on a downstream side of the casting drum. Thereafter, the laminate may be treated and dried, for example, in a dryer maintained at a temperature of 20 to 70°C for a residence time of 5 to 30 sec, and fed to a cutting apparatus through guiding rolls while keeping the laminate in a horizontal state so as not to undergo curling. In the cutting apparatus, the laminate is cut into a desired size and then stacked together. The thus obtained laminates in the form of a sheet product are packaged and then shipped.

The laminate for use in the present invention may be produced by not only the above co-extrusion method but also a dry lamination method or a coating method. For example, in the coating method, after producing a film or sheet corresponding to the layer A, a coating layer corresponding to the layer B or the layer C may be formed on the surface of the film or sheet. Further, in the dry lamination method or coating method, the portion corresponding to the layer A may also be in the form of a molded product other than the film or sheet.

More specifically, the multi-color developing laser marking thermoplastic polymer composition (a) used in the present invention solely or a mixture of the composition (a) and the other polymer may be formed into a molded product having a desired shape by various molding methods such as injection-molding, extrusion-molding, hollow-molding,

compression-molding, sheet-extruding, vacuum-forming, foam-molding and blow-molding. The shape of the molded product may be appropriately selected from various shapes according to objects and applications thereof, and the portion to be subjected to laser marking may have any shape such as a flat surface, a curved surface and an irregular surface with corners as long as a laser light can be irradiated thereto. The above molded product contains at least the polymer, the chromatic colorant and the black substance, and usually exhibits a black or dark background color.

<Multi-color laser marking method>

When the laminate for use in the present invention is irradiated with two or more laser lights having different energies from each other, markings having two or more different color tones are produced thereon. In general, the "energy" of the laser light varies depending upon conditions used upon irradiating the laser light. More specifically, by varying kinds, wavelengths, pulse widths, frequencies and output powders of laser lights irradiated as well as irradiating time, irradiating area, distance and angle between a light source and the laminate, and irradiating method, two or more laser lights having "different energies" from each other can be produced upon irradiation thereof. Still more specifically, not only when using laser lights having different wavelengths from each other, but also even when using laser lights having the same wavelength which are however different in irradiation conditions such as irradiating time from each other, the laser lights having different energies from each other can be produced. Further, even under the same irradiation conditions, the energy of the laser light irradiated to an objective only one time would be different from that irradiated thereto two or more times. In this case, the latter laser light which is irradiated two or more times, i.e., irradiated for a longer period of time, is used as the laser light having a "high energy".

In addition, the "two or more laser lights having different energies from each other" used in the present invention also mean two or more laser lights which are different in degree of damage against an objective to be irradiated, from each other. Even when all of the above irradiation conditions are the same, the degrees of damage against the objective to be irradiated with the laser light are different between the case where the laser light is irradiated thereto only one time and the case where the laser light is irradiated thereto plural times. Thus, the laser lights irradiated to the objective different times are also involved in the "two or more laser lights having different energies from each other". Namely, even though the laser light irradiated has the same total energy, if the degree of damage against the objective upon irradiating the laser light two times is larger than that upon irradiating the laser light only one time, the former laser light is used as the laser light having a "high energy".

In the laser marking method used in present invention, the laser lights may be irradiated to the laminate under any irradiation conditions unless the excellent multi-color laser marking performance of the present invention is adversely affected to a considerable extent. The laser irradiation method may be either a scanning method or a masking method. Also, the two or more laser lights having different energies from each other may be irradiated either at the same time or one by one separately from each other. As the laser irradiating apparatus, there may be used ordinary laser marking apparatuses, etc. The laser marking apparatuses are usually equipped with a laser generator, a laser modulator, a handling unit, a controller, etc., in which a laser light generated from the laser generator is subjected to pulse modulation using the laser modulator, and then irradiated to the surface of the laminate to form markings thereon. Meanwhile, upon the laser marking, the two or more laser lights having different energies from each other may be generated from either a single apparatus or a plurality of apparatuses. As the apparatus capable of performing the laser marking with two laser lights having different wavelengths from each other, there may be used, for example, laser marking systems "RSM50D Model" and "RSM30D Model" both manufactured by Rofin Berzel Inc.

The laser lights used in the present invention may be generated from any of a gas laser, a solid laser, a semiconductor laser, a dye layer, an excimer laser and a free electron. Of these laser lights, preferred are laser lights having a wavelength of 100 to 2,000 nm. Meanwhile, in the present invention, the numeral representing a wavelength of each laser light, for example, such as 1,064 nm and 532 nm, means a central wavelength and usually includes a tolerance of $\pm$3%.

Examples of the gas laser may include a helium/neon laser, a rare gas ion laser, a helium/cadmium laser, a metal vapor laser, a carbon dioxide gas laser, etc. Examples of the solid laser may include a ruby laser, a neodymium laser, a wavelength-variable solid laser, etc. The semiconductor layer may be either an inorganic semiconductor laser or an organic semiconductor layer. Examples of the inorganic semiconductor laser may include GaAs/GaAlAs-based laser, InGaAs-based layer, InP-based laser, etc. Further, there may also be used semiconductor laser-excited solid lasers such as Nd:YAG laser, Nd:$YVO_4$ laser and Nd:YLF laser. These laser lights may be used alone or in combination of any two or more thereof.

In the multi-color laser marking of the present invention, when the laminate for use in the present invention is irradiated with the laser lights, the portions where the black substance undergoes changes (such as dissipation and discoloration) exhibit a strong development of a color other than that of the black substance, whereas the portions where the chromatic colorant undergoes changes (such as decomposition and scattering) exhibit a faded color owing to decrease in density of the color derived from the chromatic colorant, or a white color. When the energy of the laser light irradiated

is low, the black substance is dissipated owing to vaporization, volatilization or complete decomposition thereof, or at least a part or a while of the black substance remains in situ and exhibits a color different from its original black color owing to decomposition thereof, etc., whereas the laser-irradiated portions exhibit the color derived from the chromatic colorant. When the energy of the laser light irradiated is further increased, since the change of the chromatic colorant contained in the multi-color laser marking thermoplastic polymer composition (a) occurs at a higher energy than the energy causing the change of the black substance, the portions irradiated with the laser light having a high energy exhibit a white color or a faded color owing to decrease in density of the color derived from the chromatic colorant.

The color development method by irradiation with a laser light is described below by referring to accompanying drawings. However, the multi-color laser marking method of the present invention is not particularly limited thereto.

Two laser lights having different energies from each other are irradiated to different positions of the laminate (1) for use in the present invention (Fig. 1(I)). In this case, the irradiation of the laser lights may be conducted at the same time or separately from each other. The portions irradiated with the laser light having a lower energy are marked with the color derived from the chromatic colorant ((3a) in Fig. 1), whereas the portions irradiated with the laser light having a higher energy are marked with a white color or a faded color owing to decrease in density of the color derived from the chromatic colorant ((3b) in Fig. 1) (Fig. 1(II)). According to the above procedure, the laminate (1) having markings with two different color tones (laminate with multi-color markings) can be obtained.

Also, when the laminate (1) for use in the present invention is first irradiated with a laser light having a low energy to form a marking portion exhibiting the color derived from the chromatic colorant over an extensive area thereof, and then an inside portion of the marking portion is further irradiated with the laser light, the irradiated inside portion may be allowed to exhibit markings with a white color or a faded color owing to decrease in density of the color derived from the chromatic colorant (refer to Fig. 2) . More specifically, in Fig. 2, there is shown the laminate (1) having markings with two different color tones thereon (laminate with multi- color markings) in which a marking portion (3a) exhibiting the color derived from the chromatic colorant which is formed by irradiating thereto a laser light having a low energy, is further irradiated with the laser light so that a marking portion (3b) exhibiting a white color or a faded color owing to decrease in density of the color derived from the chromatic colorant is formed inside of the former marking portion. According to the above method, there can be obtained laser markings in which the marking portion (3a) exhibiting the color derived from the chromatic colorant and the marking portion (3b) exhibiting a white color or a faded color owing to decrease in density of the color derived from the chromatic colorant are disposed adjacent to each other. Meanwhile, the laser light irradiated second time is not particularly limited, and may be the same as or different from the laser light irradiated first time.

In order to obtain clear two-color markings by the multi-color developing laser marking method of the present invention, the laser light having a lower energy preferably causes remarkable dissipation of the color derived from the black substance because the color derived from the chromatic colorant can be more clearly exhibited. Whereas, the laser having a higher energy preferably causes a more remarkable decrease in density of the color derived from the chromatic colorant.

In order to obtain clear three or more-color markings by the multi-color developing laser marking method of the present invention, the layer A may contain either one kind of the chromatic colorant solely or two or more kinds of the chromatic colorants. From the standpoint of facilitated formation of clearer markings, the layer A preferably contains two or more kinds of the chromatic colorants.

As the method of simply obtaining laser lights having different energies from each other, there may be used a method of employing laser lights having different wavelengths from each other. For example, in the case where two laser lights which are different in wavelength from each other are irradiated to form clear markings by the multicolour developing laser marking method of the present invention, the difference between wavelengths of the laser lights is preferably not less than 100 nm, more preferably not less than 200 nm and still more preferably not less than 500 nm. Meanwhile, the upper limit of the difference between wavelengths of the laser lights is usually 1,500 nm.

When the chromatic colorant used in the present invention, i.e., the chromatic colorant exhibiting an exothermic peak temperature ranging from 360 to 590°C as measured by a differential thermal analysis, is employed to form clear markings exhibiting the color derived from the chromatic colorant as well as those exhibiting a white color or a faded color owing to decrease in density of the color derived from the chromatic colorant by irradiating two laser lights which are different in wavelength from each other, it is preferable to use the laser light having a wavelength of 1,064 nm and the laser light having a wavelength of 532 nm. More specifically, by irradiating the laser light having a wavelength of 1,064 nm, clear markings exhibiting the color derived from the chromatic colorant can be suitably obtained, whereas by irradiating the laser light having a wavelength of 532 nm, clear markings exhibiting a white color or a faded color owing to decrease in density of the color derived from the chromatic colorant can be suitably obtained.

The "color derived from the chromatic colorant" obtained by the laser marking method of the present invention means mainly such a color obtained as a result of dissipation, discoloration, etc., of the black substance upon irradiating a laser light thereto. More specifically, the color derived from the chromatic colorant includes colors exhibited by lessening influence of the color of the black substance owing to dissipation, discoloration, etc., of the black substance, such as

(a) the color of the chromatic colorant itself used in the present invention (hereinafter referred to merely the "color of the colorant of the present invention"), (b) a blackish color of the color of the colorant of the present invention (a mixed color of the color of the colorant of the present invention and the color of the black substance or a mixed color of the color of the colorant of the present invention and a color owing to discoloration of the color of the black substance), (c) a color owing to color change, i.e., discoloration of the chromatic colorant used in the present invention, and (d) a blackish color of the above color (c).

Also, the "faded color owing to decrease in density of the color derived from the chromatic colorant" obtained by the laser marking method of the present invention means such a color obtained by decreasing a density of the above "color derived from the chromatic colorant". The faded color is mainly obtained as a result of change in the chromatic colorant by irradiating a laser light thereto. More specifically, the faded color includes, in addition to the color exhibited by lessening influence of the color of the chromatic colorant owing to decomposition, scattering, etc., of the chromatic colorant, such a color owing to color change, i.e., discoloration of the chromatic colorant used in the present invention. The "faded color owing to decrease in density of the color derived from the chromatic colorant" is preferably closer to a white color in order to distinguish the above "color derived from the chromatic colorant" therefrom.

The above "white color" obtained by the laser marking method of the present invention may be mainly a color of the polymer itself contained in the multi-color developing laser marking thermoplastic polymer composition (a) used in the present invention, and includes not only a pure white color but also a white-based color as a mixed color of white and other colors. In addition to these colors, if the composition (a) contains titanium black as the black substance, the "white color" further includes a color derived from titanium dioxide obtained by irradiating a laser light to the titanium black, a mixed color of the color derived from titanium dioxide and the color of the polymer. Examples of the "white color" also include a color derived from a white-based substance optionally added according to requirements, a mixed color of the color derived from the white-based substance and the color of the polymer, etc. When the polymer contained in the multi-color laser marking thermoplastic polymer composition (a) tends to be readily foamed by receiving the laser light, the portions irradiated with a laser light having a high energy can exhibit a color having a higher whiteness.

Meanwhile, the whiteness of the above "white color" may be evaluated according to JIS K7105, etc. The whiteness means a degree of white color, and may be evaluated by a reflectance of an objective when irradiating a certain constant amount of light thereto. The reflectance may be measured by a Hunter whiteness meter, etc. The reflectance varies depending upon kind of light irradiated (wavelength, etc.), and may be measured using a blue light as one of three primary colors of light upon the measurement using the Hunter whiteness meter. The whiteness (%) of white markings obtained on the laminate (1) for use in the present invention can be expressed by a ratio of an intensity of a light reflected from the laminate to that of a reflected light from magnesium oxide. Although the whiteness measured by the whiteness meter is not necessarily consistent with that obtained by visual sense of human eyes, the whiteness of the white markings formed on the laminate (1) for use in the present invention is not particularly limited as long as the color is recognized as a white color by human eyes. However, the whiteness as a scale is preferably 55 to 100%, more preferably 60 to 100%, still more preferably 70 to 100% and further still more preferably 80 to 100%.

<Laminate with multi-color laser markings>

The laminate having markings with two or more different color tones produced according to the present invention (hereinafter referred to merely as the "laminate with multi-color markings") is obtained by irradiating laser lights having different energies from each other to the above laminate.

The non-marked portions (laser-unirradiated portions) in the layer A of the laminate with the multi-color markings produced according to the present invention are constituted from the polymer, the chromatic colorant, the black substance, etc. In the portions irradiated with the laser light having a low energy (for example, laser light having a wavelength of 1,064 nm), the black substance is dissipated or discolored (undergoes whitening, etc.), whereas the chromatic colorant remains without change. On the other hand, the portions irradiated with the laser light having a high energy (for example, laser light having a wavelength of 532 nm) exhibit a white color or a faded color owing to decrease in density of the color derived from the chromatic colorant. In the portions irradiated with the laser light having a high energy, the black substance is vaporized or whitened, whereas almost all of the chromatic colorant disappears although only a part thereof still remains therein. This is because the chromatic colorant undergoes decomposition, scattering, etc., owing to irradiation with the laser light.

Meanwhile, the marking portions tend to be foamed depending upon kind of the polymer constituting the layer A of the laminate with multi- color markings produced according to the present invention. In particular, when a polyacetal resin, a styrene- based resin produced by using methyl methacrylate as a monomer component, a rubber- reinforced thermoplastic resin produced by using methyl methacrylate as a monomer component, etc.; is used as the polymer, there can be obtained such foamed marking portions.

In the laminate with multi-color markings produced according to the present invention, the marking portions obtained by irradiating a laser light thereto (laser-irradiated portions) tend to suffer from deformation depending upon

kinds of the polymer, black substance, etc., which are contained in the layer A. More specifically, when irradiating a laser light to the layer A, the irradiated portions tend to form convex portions owing to foaming, swelling, etc., and concave portions owing to occurrence of shrinkage, etc.

The laminate with multi-color markings produced according to the present invention may be used in various applications. In particular, the layer B of the laminate may function as a lamination layer upon laminating the laminate on the other products, and used as a adhesive coating layer or a meltbonding layer. Therefore, the laminate for use in the present invention can be applied to not only prepaid cards, but also, for example, advertising plates when attached onto a rear portion of a driver's seat of taxes.

EXAMPLES

The present invention is described in more detail by the following Examples, but these Examples are only illustrative and, therefore, not intended to limit the scope of the present invention. Meanwhile, in the following Examples and Comparative Examples, various properties were measured and evaluated by the following methods. Further, in the following Examples and Comparative Examples, "%" and "part" represent "% by weight" and "part by weight", respectively, unless otherwise specified.

<1. Testing methods>

(1) Exothermic peak temperature of chromatic colorant:

The exothermic peak temperature of each of the belowmentioned colorants was measured by a differential thermal analysis using a measuring apparatus "TG-DTA320 Model (horizontal-type furnace)" manufactured by Seiko Denshi Co., Ltd. That is, 3 mg of a sample was uniformly and densely filled into a dish-shaped aluminum container having a diameter of 5 mm and a height of 2.5 mm and heated at a temperature rise rate of 10°C/min to measure an exothermic peak temperature thereof in air at a flow rate of 200 mL/min. Meanwhile, the calibration of a temperature in the measuring apparatus was conducted using indium and tin, whereas the calibration of a weight of the sample was conducted at room temperature using a weight and further using calcium oxalate. The exothermic peak temperature was determined as a peak top observed in the temperature rise curve of the sample. The temperature rise curve of the below-mentioned colorant C-1 is shown in Fig. 3. The exothermic peak temperatures of the respective colorants were also measured. The results are shown in Table 7.

(2) Method for evaluation of laminate sheet:

(i) Light transmittance of surface layer:

A film having the same thickness as that of the surface layer was prepared, and a light transmittance of the film was measured using a spectrophotometer "V-570" manufactured by Nippon Bunko Co., Ltd., by irradiating a light having a wavelength of 600 nm thereto.

(ii) Evaluation of appearance of sheet:

A sheet having a width of 1000 mm and a length of 5 m which was obtained using an extruder was visually observed to evaluate an appearance thereof according to the following ratings.

Table 2

A: No flow marks, etc., occurred, and usable without problems;
B: Some flow marks occurred, but still usable without problems; and
C: Severe flow marks occurred, and unusable as a commercial product.

(iii) Evaluation of development of chromatic color:

Using a laser marking apparatus "Power Line-E" (1064 nm-type) manufactured by Rofin Berzel Inc., a sheet was color-developed at an output power of 24.0 to 30.0 A, a frequency of 4.0 to 13.0 kHz and a scanning speed of 400 mm/s and visually observed to evaluate color development thereof according to the following ratings.

Table 3

A: Chromatic color was visually recognized; and
B: Poor development of chromatic color with practical problems when used as a commercial product, or no color development occurred.

(iv) Evaluation of development of white color:

Using a laser marking apparatus "Power Line-E" (1064 nm-type) manufactured by Roffin Berzel Inc., a sheet was color-developed at an output of 24.0 to 30.0 A, a frequency of 4.0 to 13.0 kHz and a scanning speed of 400 mm/s and visually observed to evaluate color development thereof according to the following ratings.

Table 4

A: White color was visually recognized; and
B: Development of white color was insufficient, or no color development occurred.

(v) Evaluation of surface smoothness:

A sheet having a width of 1000 mm and a length of 5 m which was obtained using an extruder was tested to evaluate a touch feed thereof according to the following ratings.

Table 5

A: Smooth sheet surface without problems; and
B: Irregularities occurred on laser-irradiated portions on the sheet surface with practical problems.

(vi) Evaluation of chemical resistance:

Marking portions exhibiting a white color or chromatic color were rubbed with a gauze impregnated with 1 mL of ethanol (first grade) for 200 strokes by applying a load of 1 kg thereto, and then visually observed to evaluate an appearance of a surface layer thereof according to the following ratings. Meanwhile, the time required for one rubbing stroke was set to 10 sec.

Table 6

A: No change in appearance between before and after the test occurred, and usable without problems;
B: Slight change in appearance between before and after the test occurred, but still usable without problems; and
C: Cracks occurred, and unusable owing to practical problems.

(vii) Method for measuring coefficient of kinetic friction ($\mu d$):

Two laminates each cut into a width of 15 mm and a length of 150 mm were stacked together on a smooth glass plate, and further a rubber plate was superimposed thereon. Then, a weight load was placed on the rubber plate to adjust a contact pressure between the two laminates to 2 $g/cm^2$, and the laminates were allowed to mutually slip at a velocity of 20 mm/min in order to measure a friction force therebetween. The friction coefficient at a point at 5 mm slippage occurred was determined as a coefficient of kinetic friction ($\mu d$). The measurement was conducted using a friction measuring apparatus "TR-2" manufactured by Toyo Seiki Co., Ltd.

(viii) Heat sealability:

The two laminates described below were superimposed on each other, and sandwiched between protective sheets made of Teflon (registered trademark) from both outer surfaces thereof. The laminates were heat-sealed together at 140°C under a pressure of 5 kg/cm$^2$ for 10 sec using a bar sealer. Next, the protective sheets made of Teflon (registered trademark) were removed from the laminates, and then the laminates were cut into a strip shape such that a width of the heat-sealed portion thereof was 15 mm, thereby obtaining a sample for measurement of T-peel strength. The T-peel strength of the sample was measured using a tensile tester at a temperature of 30°C, a relative humidity of 50%, a distance between chucks of 100 mm and a pulling velocity of 300 mm/min. The measurement was conducted five times, and an average value of the five measured values was determined as a peel strength of the sample.

(ix) Evaluation of durability test for laser-marked surface:

The below-mentioned laminate was subjected to laser marking treatment, and the thus treated surface (having a length of 30 mm and a width of 30 mm) was repeatedly subjected to a keying test 1,000,000 times under a load of 2 kg. After the test, an appearance of the laminate was visually observed to evaluate a durability thereof according to the following ratings.

Table 7

A: Excellent;
B: Good (without practical problems); and
C: Poor (deteriorated in clarity and recognizability with practical problems)

<3. Materials used>

(A) Materials used for intermediate layer:

(A-1) Rubber-reinforced acrylic graft copolymer:

Rubber- reinforced acrylic graft copolymer comprising 30% by weight of polybutadiene rubber, 16% by weight of styrene, 49% by weight of methyl methacrylate and 5% by weight of acrylonitrile, which had a graft percentage of 65% and contained an acetone- soluble component having an intrinsic viscosity [η] of 0.48 dL/g (as measured at 30°C in a methyl ethyl ketone solvent) .

(A-2) Acrylic copolymer:

Acrylic copolymer comprising 21% by weight of styrene, 72% by weight of methyl methacrylate and 7% by weight of acrylonitrile, which had an intrinsic viscosity [η] of 0.49 dL/g (as measured at 30°C in a methyl ethyl ketone solvent).

(A-3) Styrene-based copolymer:

Styrene- based copolymer comprising 60% by weight of styrene and 40% by weight of acrylonitrile, which had an intrinsic viscosity [η] of 0.52 dL/g (as measured at 30°C in a methyl ethyl ketone solvent) .

(A-4) Black substance (carbon black):

"Mitsubishi Carbon #45" produced by Mitsubishi Chemical Corporation.

(B) Materials used for surface layer:

(B-1) Polyethylene terephthalate resin:

"EASTER PETG Copolyester 6763" produced by Eastman Chemical Inc.

(B-2) Polyethylene terephthalate resin:

"UNIPET RT523" produced by Nippon Unipet Co., Ltd.

(B-3) Polycarbonate resin:

"NOVAREX 7022A" produced by Mitsubishi Engineering-Plastics Corporation.

(B-4) Acrylic resin:

"ACRYPET VH001" produced by Mitsubishi Rayon Co., Ltd.

(B-5) White polyethylene terephthalate resin:

The polyethylene terephthalate resin "UNIPET RT523" produced by Nippon Unipet Co., Ltd., was mixed with an anatase-type titanium oxide having an average particle diameter of 0.3 μm in such an amount that a content of titanium oxide in the resultant mixture was 3% by weight. The obtained mixture was melt-kneaded using a twin-screw extruder having an inner diameter of 30 mm at a cylinder temperature of 270°C to produce the aimed resin.

(C) Chromatic colorant:

As the chromatic colorant, there were used the following colorants (C-1) to (C-13). The exothermic peak temperatures of these colorants are shown in Table 8, and a temperature rise curve of the colorant (C-1) is shown in Fig. 3.

(C-1) Copper phthalocyanine pigment:

A β-type copper phthalocyanine pigment (represented by the following formula (30)) having an average secondary particle diameter of 7.1 μm as measured by a laser scattering-type particle size distribution measuring apparatus, was used.

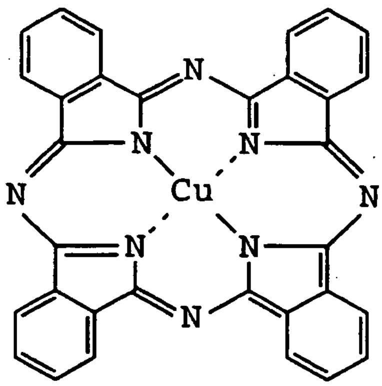

(30)

(C-2) Aluminum phthalocyanine pigment (represented by the following formula (31)):

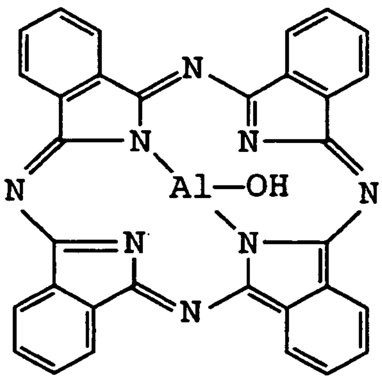

(31)

(C-3) Dioxazine-based pigment (represented by the following formula (32)):

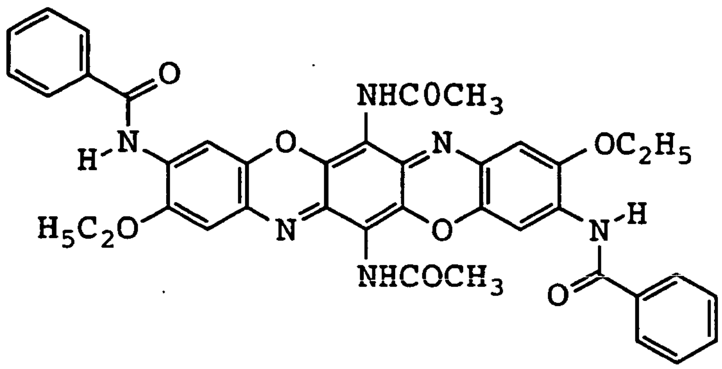

(32)

(C-4) Diketo-pyrrolopyrrole-based pigment (represented by the following formula (33)):

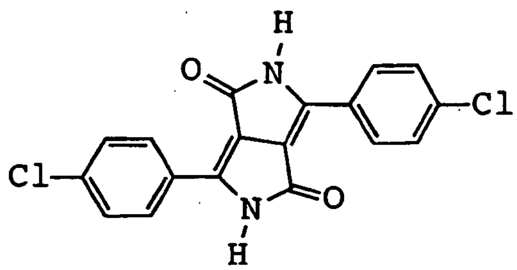

(33)

(C-5) Solvent-soluble copper phthalocyanine dye (represented by the following formula (34)):

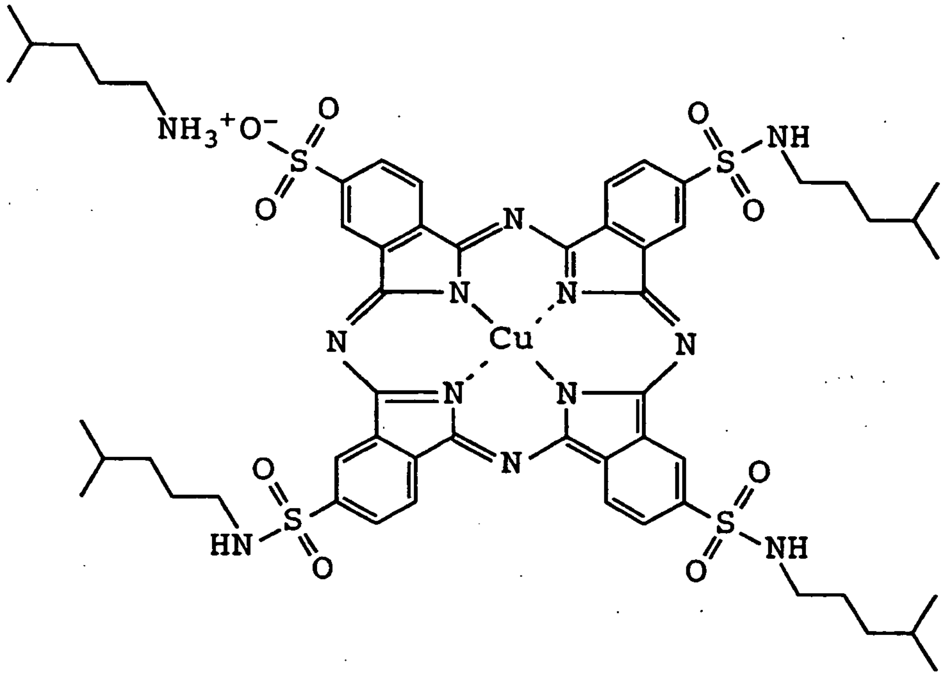

(34)

(C-6) Quinacridone-based pigment (represented by the following formula (35)):

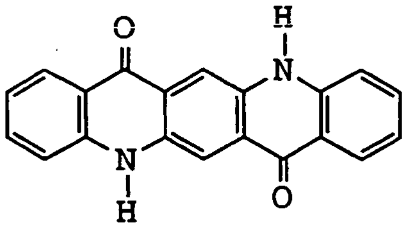

(35)

(C-7) Quinophthaline-based pigment (represented by the following formula (36)):

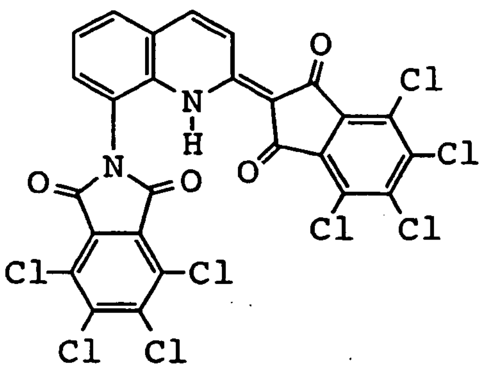

(36)

(C-8) Perylene-based pigment (represented by the following formula (37)):

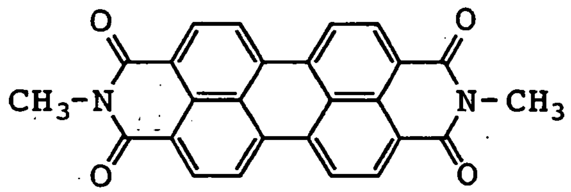

(37)

(C-9) Metal complex-based pigment (represented by the following formula (38)):

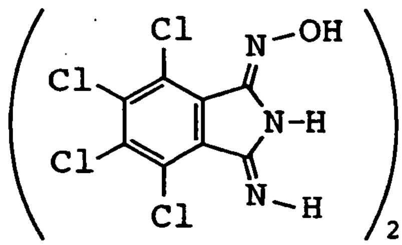

(38)

(C-10) Anthraquinone-based pigment (represented by the following formula (39)):

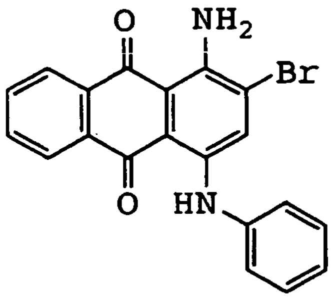

(39)

(C-11) Perylene-based dye (represented by the following formula (40)):

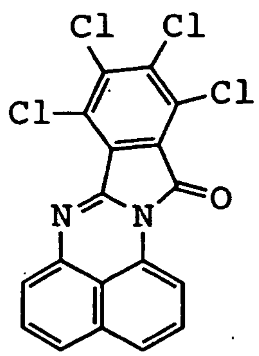

(40)

(C-12) Iron phthalocyanine pigment (represented by the following formula (41)):

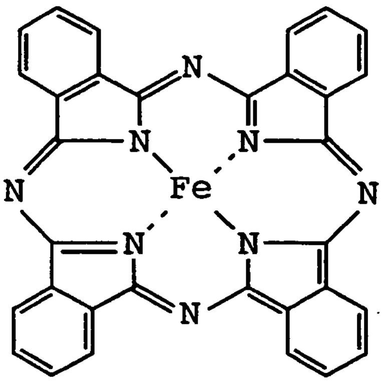

(41)

(C-13) Perylene black (represented by the following formula (42)):

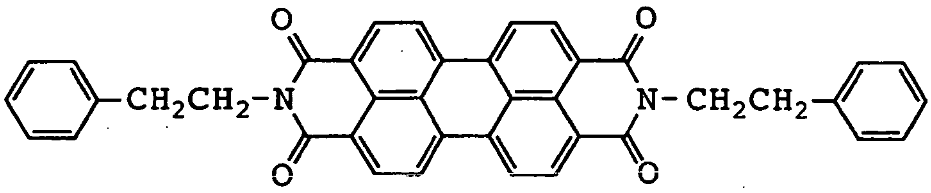

(42)

Table 8

| Chromatic colorants | | | Exothermic peak temp. (°C) | Amount of sample used in differential thermal analysis (mg) |
|---|---|---|---|---|
| Kind | | Color | | |
| (C-1) | Copper phthalocyanine pigment | Blue | 487 | 2.906 |
| (C-2) | Aluminum phthalocyanine pigment | Green | 581 | 2.946 |
| (C-3) | Dioxazine-based pigment | Violet | 401 | 3.236 |
| (C-4) | Diketo-pyrrolopyrrole-based pigment | Red | 550 | 3.299 |
| (C-5) | Solvent-soluble copper phthalocyanine dye | Bluish green | 498 | 3.090 |
| (C-6) | Quinacridone-based pigment | Violet | 559 | 2.819 |
| (C-7) | Quinophthaline-based pigment | Yellow | 550 | 3.020 |
| (C-8) | Perylene-based pigment | Red | 581 | 2.998 |
| (C-9) | Metal complex-based pigment | Red | 510 | 3.171 |
| (C-10) | Anthraquinone-based dye | Blue | None | 2.818 |
| (C-11) | Perinone-based dye | Orange | None | 2.978 |
| (C-12) | Iron phthalocyanine pigment | blue | 357 | - |

(continued)

| Chromatic colorants | | | Exothermic peak temp. (°C) | Amount of sample used in differential thermal analysis (mg) |
|---|---|---|---|---|
| Kind | | Color | | |
| (C-13) | Perylene black | Black | 602 | 3.016 |

<4. Production of pellets used for intermediate layer>

The respective components (A-1), (A-2), (A-3), (A-4) and (C) as shown in the following Table 9 were charged into a mixer. Next, the obtained mixture was melt-kneaded using an extruder having an inner diameter of 50 mm at a cylinder temperature of 190 to 260°C, thereby producing pellets (1) to (3).

Table 9

| Pellets | Component (A) | | | | Component (C) |
|---|---|---|---|---|---|
| | (A-1) | (A-2) | (A-3) | (A-4) | |
| Pellet (1) | 50 | 40 | 10 | 0.05 | (C-1) 0.2 |
| Pellet (2) | 50 | 40 | 10 | 0.05 | (C-2) 0.1 |
| Pellet (3) | 50 | 40 | 10 | 0.05 | (C-3) 0.2 |
| Pellet (4) | 50 | 40 | 10 | 0.05 | (C-4) 0.05 |
| Pellet (5) | 50 | 40 | 10 | 0.05 | (C-5) 0.2 |
| Pellet (6) | 50 | 40 | 10 | 0.05 | (C-6) 0.2 |
| Pellet (7) | 50 | 40 | 10 | 0.05 | (C-7) 0.2 |
| Pellet (8) | 50 | 40 | 10 | 0.05 | (C-8) 0.2 |
| Pellet (9) | 50 | 40 | 10 | 0.05 | (C-9) 0.2 |
| Pellet (10) | 50 | 40 | 10 | 0.05 | (C-10) 0.2 |
| Pellet (11) | 50 | 40 | 10 | 0.05 | (C-11) 0.2 |
| Pellet (12) | 50 | 40 | 10 | 0.05 | (C-12) 0.2 |
| Pellet (13) | 50 | 40 | 10 | 0.05 | (C-13) 0.2 |

Examples 1 to 12 and Comparative Examples 1 to 7:

The respective materials for the intermediate layer (layer A) and the surface layer (layer B) as shown in Tables 10 to 12 were fed into a 120 mmΦ vented twin-screw extruder (for layer A) and a 65 mmΦ vented twin-screw extruder (for layer B), respectively. Further, a master batch prepared by blending amorphous silica (having an average particle diameter of 4 μm) in the polyethylene terephthalate resin (B-1) in an amount of 5% by weight based on the weight of the resin (B-1) was charged into the extruder for the layer B in such an amount that a content of the silica particles in the resultant mixture was 0.2% by weight on the basis of the weight of the materials forming the layer B.

The both materials for the intermediate layer (layer A) and the surface layer (layer B) were maintained at a temperature of 250°C and extruded through a T-die equipped with a feed block, and then rapidly cooled on a casting drum held at 40°C. By controlling an output amount from each extruder, there was obtained a laminate which was made of two kinds of materials and had a three-layer structure (B/A/B) in which a thickness of each layer B was 20 μm and a thickness of the layer A was 260 μm (a total thickness of the layers B corresponds to 13% of a whole thickness of the resultant sheet).

Next, the surface of the thus obtained laminate was coated with an aqueous solution prepared by diluting a 30 wt% dimethyl siloxane emulsion with water to adjust a solid concentration thereof to 3% by weight, in a coating amount of 2 $mL/m^2$, dried, and then cut into a predetermined length, thereby obtaining a laminate in the form of a cut sheet. The thus obtained laminate sheet was evaluated by the same method as defined above. The results are shown in Tables 10 to 12.

Table 10

| | Examples | | | |
|---|---|---|---|---|
| | 1 | 2 | 3 | 4 |
| Material for surface layer | (B-1) | (B-2) | (B-3) | (B-4) |
| Material for intermediate layer | Pellet 1 | Pellet 1 | Pellet 1 | Pellet 1 |
| Thickness of surface layer (μm) | 20 | 20 | 20 | 20 |
| Thickness of intermediate layer (μm) | 260 | 260 | 260 | 260 |
| Total thickness (μm) | 300 | 300 | 300 | 300 |
| Light transmittance of surface layer (thickness: 20 μm) (%) | 91 | 90 | 92 | 93 |
| Appearance of sheet | A | A-B | A-B | A-B |
| Laser color developability | | | | |
| 1064 nm | Blue:A | Blue:A | Blue:A | Blue:A |
| 532 nm | White:A | White:A | White:A | White:A |
| Surface smoothness | A | A | A | A |
| Chemical resistance | A | A | B | B |
| Coefficient of kinetic friction (μd) | 0.31 | 0.30 | 0.45 | 0.32 |
| Peel strength (kg/15 nm) | 2.29 | *2 | *2 | 0.08 |
| Evaluation of durability of laser-marked surface | A | A | A | A |

Table 10 (continued)

| | Comparative Examples | | |
|---|---|---|---|
| | 1 | 2 | 3 |
| Material for surface layer | Pellet 1 | (B-5) | (B-1) |
| Material for intermediate layer | Pellet 1 | Pellet 1 | (B-1) |
| Thickness of surface layer (μm) | 20 | 20 | 20 |
| Thickness of intermediate layer (μm) | 260 | 260 | 260 |
| Total thickness (μm) | 300 | 300 | 300 |
| Light transmittance of surface layer (thickness: 20 μm) (%) | 40 | 60 | 91 |
| Appearance of sheet | A | A | A |
| Laser color developability | | | |
| 1064 nm | B | B | B |
| 532 nm | B | B | B |
| Surface smoothness | B | B | Not evaluated |
| Chemical resistance | B-C | Not evaluated | Not evaluated |
| Coefficient of kinetic friction (μd) | *1 | 0.32 | 0.30 |
| Peel strength (kg/15 nm) | 2.40 | *2 | 2.35 |
| Evaluation of durability of laser-marked surface | C | Not evaluated | Not evaluated |

Note: *1: No slippage occurred, and therefore the friction coefficient was unmeasurable.
*2: No adhesion between layers occurred.

Table 11

| | Examples | | | |
|---|---|---|---|---|
| | 5 | 6 | 7 | 8 |
| Material for surface layer | (B-1) | (B-1) | (B-1) | (B-1) |
| Material for intermediate layer | Pellet 2 | Pellet 3 | Pellet 4 | Pellet 5 |
| Thickness of surface layer (μm) | 20 | 20 | 20 | 20 |
| Thickness of intermediate layer (μm) | 260 | 260 | 260 | 260 |
| Total thickness (μm) | 300 | 300 | 300 | 300 |
| Light transmittance of surface layer (thickness: 20 μm) (%) | 91 | 91 | 91 | 91 |
| Appearance of sheet | A | A | A | A |
| Laser color developability | | | | |
| 1064 nm | Green:A | Pink:A | Violet:A | Green:A |
| 532 nm | White:A | White:A | White:A | White:A |
| Surface smoothness | A | A | A | A |
| Chemical resistance | A | A | A | A |

Table 11 (continued)

| | Examples | | |
|---|---|---|---|
| | 9 | 10 | 11 |
| Material for surface layer | (B-1) | (B-1) | (B-1) |
| Material for intermediate layer | Pellet 6 | Pellet 7 | Pellet 8 |
| Thickness of surface layer (μm) | 20 | 20 | 20 |
| Thickness of intermediate layer (μm) | 260 | 260 | 260 |
| Total thickness (μm) | 300 | 300 | 300 |
| Light transmittance of surface layer (thickness: 20 μm) (%) | 91 | 91 | 91 |
| Appearance of sheet | A | A | A |
| Laser color developability | | | |
| 1064 nm | Violet:A | Yellow:A | Red:A |
| 532 nm | White:A | White:A | White:A |
| Surface smoothness | A | A | A |
| Chemical resistance | A | A | A |

Table 12

| | Examples | Comparative Examples | |
|---|---|---|---|
| | 12 | 4 | 5 |
| Material for surface layer | (B-1) | (B-1) | (B-1) |
| Material for intermediate layer | Pellet 9 | Pellet 10 | Pellet 11 |
| Thickness of surface layer (μm) | 20 | 20 | 20 |
| Thickness of intermediate layer (μm) | 260 | 260 | 260 |
| Total thickness (μm) | 300 | 300 | 300 |
| Light transmittance of surface layer (thickness: 20 μm) (%) | 91 | 91 | 91 |
| Appearance of sheet | A | A | A |
| Laser color developability | | | |
| 1064 nm | Red:A | Blue:A | Red:A |
| 532 nm | White:A | Blue:B | Red:B |
| Surface smoothness | A | A | A |
| Chemical resistance | A | A | A |

Table 12 (continued)

| | Comparative Examples | |
|---|---|---|
| | 6 | 7 |
| Material for surface layer | (B-1) | (B-1) |
| Material for intermediate layer | Pellet 12 | Pellet 13 |
| Thickness of surface layer (μm) | 20 | 20 |
| Thickness of intermediate layer (μm) | 260 | 260 |
| Total thickness (μm) | 300 | 300 |
| Light transmittance of surface layer (thickness: 20 μm) (%) | 91 | 91 |
| Appearance of sheet | A | A |
| Laser color developability | | |
| 1064 nm | Greenish black:B | Red:A |
| 532 nm | White:A | Red:B |
| Surface smoothness | A | A |
| Chemical resistance | A | A |

The multi-color developed laminates of Examples 1 to 12 produced according to the present invention exhibited good properties as aimed including a good appearance, a good laser-color developability, a good surface smoothness and a good chemical resistance. On the other hand, the laminate of Comparative Example 1 whose surface layer was formed from the materials other than those defined in the present invention was deteriorated in laser-color developability, surface smoothness, chemical resistance, coefficient of kinetic friction and durability of the laser-marked surface, and the laminate of Comparative Example 2 whose surface layer was formed from the materials other than those defined in the present invention was deteriorated in laser-color developability, surface smoothness and adhesion property. Also, the laminate of Comparative Example 3 whose intermediate layer was formed from the materials other than those defined in the present invention was deteriorated in laser-color developability, and the laminates of Comparative Examples 4 to 7 which were produced by using the colorants other than the chromatic colorants defined in the present invention, were deteriorated in laser-color developability.

## Claims

1. A process for producing a laminate which is laser-marked with two or more different color tones, which process comprises irradiating two or more laser lights having different energies to a laminate for laser marking, comprising:

   a layer A comprising a multi-color developing laser marking thermoplastic polymer composition capable of producing markings having two or more different color tones by irradiating thereto two or more laser lights having different energies from each other, the composition satisfying the following requirements (1) and (2):

   (1) comprising, at the following mixing ratio,
   a chromatic colorant which has an exothermic peak temperature lying within the range of 360 to 590°C as measured by a differential thermal analysis, the chromatic colorant having at least one skeleton selected from the group consisting of a phthalocyanine skeleton, a diketo-pyrrolopyrrole skeleton, a dioxazine skeleton, a quinacridone skeleton, a quinophtahlone skeleton, an anthraquinone skeleton, a perylene skeleton and a metal complex skeleton;

a black substance capable of being dissipated by itself or discolored when exposed to the laser lights; and a thermoplastic polymer selected from the group consisting of (i) rubber-reinforced thermoplastic resins produced by using methyl methacrylate as a monomer component, (ii) polymethyl methacrylate and copolymers containing a methyl methacrylate monomer unit in an amount of not less than 30% by weight, (iii) polyacetal resins and (iv) polyamide resins,
wherein the rubber-reinforced thermoplastic resins produced by using methyl methacrylate as a monomer component (i) are selected form the group consisting of

(i-1) a rubber-reinforced copolymer resin obtained by polymerizing a monomer containing methyl methacrylate in the presence of the rubber polymer,
(i-2) a rubber-reinforced thermoplastic resin comprising a combination of the above rubber-reinforced copolymer resin (i-1) and a (co)polymer obtained by polymerizing a monomer containing methyl methacrylate,
(i-3) a rubber-reinforced thermoplastic resin comprising a combination of the above rubber-reinforced copolymer resin (i-1) and a (co)polymer obtained by polymerizing a monomer containing an aromatic vinyl compound and a cyanided vinyl compound, and
(i-4) a rubber-reinforced thermoplastic resin comprising a combination of a rubber-reinforced copolymer resin obtained by polymerizing a monomer containing an aromatic vinyl compound and a cyanided vinyl compound in the presence of the rubber polymer without using methyl methacrylate, and a (co) polymer obtained by polymerizing a monomer containing methyl methacrylate, and

(2) containing the chromatic colorant and the black substance in an amount of from 0.001 to 3 parts by weight and from 0.01 to 2 parts by weight, respectively, on the basis of 100 parts by weight of the thermoplastic polymer; and

a layer B formed on at least one surface of the layer A, the layer B comprising a transparent thermoplastic resin, and exhibiting a light transmittance of not less than 70 % as a single layer.

**2.** Use of a laminate, comprising layers A and B as defined in claim 1, wherein layer B is formed on at least one surface of the layer A, in a multi-color laser marking method comprising (a) a step of irradiating two or more laser lights having different energies to the laminate to produce markings having two or more color tones thereon.

**3.** A process according to claim 1 or use according to claim 2, wherein a thermoplastic polymer of the multi-color developing laser marking thermoplastic polymer composition constituting the layer A is a copolymer produced by copolymerizing a (meth)acrylic ester.

**4.** A process or use according to claim 3, wherein the copolymer is a rubber-reinforced graft copolymer.

**5.** A process according to any one of claims 1, 3 and 4 or use according to any one of claims 2 to 4, wherein the transparent thermoplastic resin constituting the layer B is a polyester resin.

**6.** A process according to any one of claims 1 and 3 to 5 or use according to any one of claims 2 to 5, wherein the transparent thermoplastic resin contained in the layer B is subjected to anti-blocking treatment.

**7.** A process or use according to claim 6, wherein the polyester resin contains 1,4-cyclohexane dimethanol in an amount of 15 to 50 mol% on the basis of whole diol components contained in the polyester resin.

**8.** A process according to any one of claims 1 and 3 to 7 or use according to any one of claims 2 to 7, wherein the laminate is in the form of a film or a sheet.

**9.** Use according to any one of claims 2 to 8, wherein the multi-color laser marking method further comprises (b) a step of attaching the laser marked laminate resulting from the step (a) onto the surface of sheet-like molded products of thermoplastic resins, wherein the layer B of the laminate is used as an adhesive coating layer or melt-bonding layer to laminate the laminate onto the products.

**Patentansprüche**

1. Verfahren zur Herstellung eines Laminats, das mit zwei oder mehreren unterschiedlichen Farbtönen lasermarkiert ist, wobei das Verfahren die Bestrahlung eines Laminats zur Lasermarkierung, das Folgendes umfasst, mit zwei oder mehreren Laserlichtern mit unterschiedlichen Energien umfasst:

    eine Schicht A, umfassend eine mehrfarbige Lasermarkierung entwickelnde thermoplastische Polymerzusammensetzung, die geeignet ist, Markierungen mit zwei oder mehr verschiedenen Farbtönen durch Bestrahlung mit zwei oder mehreren Laserlichtern mit voneinander verschiedenen Energien zu erzeugen, wobei die Zusammensetzung die folgenden Erfordernisse (1) und (2) erfüllt:

        (1) umfassend im nachfolgenden Mischverhältnis
        ein buntes Farbmittel, das eine mittels Differenzthermoanalyse gemessene exotherme Peaktemperatur aufweist, die im Bereich von 360 bis 590°C liegt, wobei das bunte Farbmittel mindestens ein Grundgerüst aufweist, das aus der Gruppe ausgewählt ist, die aus einem Phthalocyanin-Grundgerüst, einem Diketopyrrolopyrrol-Grundgerüst, einem Dioxazin-Grundgerüst, einem Chinacridon-Grundgerüst, einem Chinophthalon-Grundgerüst, einem Anthrachinon-Grundgerüst, einem Perylen-Grundgerüst und einem Metallkomplex-Grundgerüst besteht;
        eine schwarze Substanz, die geeignet ist, sich zu verflüchtigen oder zu verfärben, wenn sie den Laserlichtern ausgesetzt wird;
        und ein thermoplastisches Polymer, ausgewählt aus der Gruppe bestehend aus (i) kautschukverstärkten thermoplastischen Harzen, die unter Verwendung von Methylmethacrylat als eine Monomerkomponente hergestellt sind, (ii) Polymethylmethacrylat und Copolymere, die eine Methylmethacrylat-Monomereinheit in einer Menge von nicht weniger als 30 Gew.-% enthalten, (iii) Polyacetalharzen und (iv) Polyamidharzen, wobei die unter Verwendung von Methylmethacrylat als Monomerkomponente hergestellten kautschukverstärkten thermoplastischen Harze (i) aus der Gruppe ausgewählt sind, bestehend aus

            (i-1) einem kautschukverstärkten Copolymerharz, das durch Polymerisieren eines Monomers enthaltend Methylmethacrylat in Gegenwart des Kautschukpolymers erhalten wird,
            (i- 2) einem kautschukverstärkten thermoplastischen Harz, umfassend eine Kombination aus dem kautschukverstärkten Copolymerharz (i- 1) und einem (Co)- Polymer, das durch Polymerisation eines Monomers enthaltend Methylmethacrylat erhalten wird,
            (i- 3) einem kautschukverstärkten thermoplastischen Harz, umfassend eine Kombination aus dem obigen kautschukverstärkten Copolymerharz (i- 1) und einem (Co)- Polymer, das durch Polymerisation eines Monomers enthaltend eine aromatische Vinylverbindung und eine cyanisierte Vinylverbindung erhalten wird, und
            (i- 4) einem kautschukverstärkten thermoplastischen Harz, umfassend eine Kombination aus einem kautschukverstärkten Copolymerharz, das durch Polymerisieren eines Monomers, enthaltend eine aromatische Vinylverbindung und eine cyanisierte Vinylverbindung, in Gegenwart eines Kautschukpolymers ohne Verwendung von Methylmethacrylat erhalten wird, und ein (Co)- Polymer, das durch Polymerisation eines Monomers enthaltend Methylmethacrylat erhalten wird; und

        (2) enthaltend das bunte Farbmittel und die schwarze Substanz in einer Menge von 0,001 bis 3 Gewichtsteile bzw. 0,01 bis 2 Gewichtsteile bezogen auf 100 Gewichtsteile des thermoplastischen Polymers;

    und
    eine Schicht B, die auf mindestens einer Oberfläche der Schicht A gebildet ist, wobei die Schicht B ein transparentes thermoplastisches Harz umfasst und eine Lichtdurchlässigkeit von nicht weniger als 70 % als einzelne Schicht aufweist.

2. Verwendung eines Laminats, umfassend die wie in Anspruch 1 definierten Schichten A und B, wobei die Schicht B auf mindestens einer Oberfläche der Schicht A gebildet ist, in einem mehrfarbigen Lasermarkierungsverfahren, umfassend (a) einen Schritt zur Bestrahlung des Laminats mit zwei oder mehreren Laserlichtern mit verschiedenen Energien zur Erzeugung von Markierungen mit zwei oder mehreren Farbtönen darauf.

3. Verfahren gemäß Anspruch 1 oder Verwendung gemäß Anspruch 2, wobei ein thermoplastisches Polymer der mehrfarbigen Lasermarkierung entwickelnden thermoplastischen Polymerzusammensetzung, die die Schicht A bildet, ein durch Copolymerisation eines (Meth)acrylesters hergestelltes Copolymer ist.

4. Verfahren oder Verwendung gemäß Anspruch 3, wobei das Copolymer ein kautschukverstärktes Pfropf-Copolymer ist.

5. Verfahren gemäß irgendeinem der Ansprüche 1, 3 und 4 oder Verwendung gemäß irgendeinem der Ansprüche 2 bis 4, wobei das die Schicht B bildende transparente thermoplastische Harz ein Polyesterharz ist.

6. Verfahren gemäß irgendeinem der Ansprüche 1 und 3 bis 5 oder Verwendung gemäß irgendeinem der Ansprüche 2 bis 5, wobei das in der Schicht B enthaltene transparente thermoplastische Harz einer Antiblocking-Behandlung unterzogen ist.

7. Verfahren oder Verwendung gemäß Anspruch 6, wobei das Polyesterharz 1,4-Cyclohexandimethanol in einer Menge von 15 bis 50 mol-% bezogen auf den in dem Polyesterharz enthaltenen gesamten Diolkomponenten enthält.

8. Verfahren gemäß irgendeinem der Ansprüche 1 und 3 bis 7 oder Verwendung gemäß irgendeinem der Ansprüche 2 bis 7, wobei das Laminat in Form einer Folie oder eines Blatts vorliegt.

9. Verwendung gemäß irgendeinem der Ansprüche 2 bis 8, wobei das mehrfarbige Lasermarkierungsverfahren ferner einen Schritt (b) zum Anbringen des aus dem Schritt (a) resultierenden lasermarkierten Laminats auf der Oberfläche von blattartigen Formerzeugnissen aus thermoplastischen Harzen umfasst, wobei die Schicht B des Laminats als Klebstoffbeschichtung oder schmelzbindende Schicht zur Laminierung des Laminats auf den Erzeugnissen verwendet wird.

## Revendications

1. Processus de production d'un stratifié qui est marqué au laser avec deux tonalités de couleurs différentes ou plus, lequel processus comprend l'irradiation de deux lumières laser ou plus ayant des énergies différentes sur un stratifié pour le marquage au laser, comprenant :

une couche A comprenant une composition polymère thermoplastique de marquage au laser de développement multicolore capable de produire des marquages ayant deux tonalités de couleur différentes ou plus en l'irradiant avec deux lumières laser ou plus ayant des énergies différentes l'une de l'autre, la composition satisfaisant les exigences suivantes (1) et (2) :

(1) comprenant, dans le rapport de mélange suivant,
un colorant chromatique qui a une température de pic exothermique se trouvant dans la plage allant de 360 à 590°C telle que mesurée par une analyse thermique différentielle, le colorant chromatique ayant au moins un squelette choisi dans le groupe constitué d'un squelette de phtalocyanine, d'un squelette de dicétopyrrolopyrrole, d'un squelette de dioxazine, d'un squelette de quinacridone, d'un squelette de quinophtahlone, d'un squelette d'anthraquinone, d'un squelette de pérylène et d'un squelette de complexe métallique ;
une substance noire pouvant être dissipée par elle-même ou décolorée lorsqu'elle est exposée à la lumière laser ;
et un polymère thermoplastique choisi dans le groupe constitué par (i) des résines thermoplastiques renforcées par du caoutchouc produites en utilisant du méthacrylate de méthyle en tant que composant monomère, (ii) un polyméthacrylate de méthyle et des copolymères contenant une unité monomère de méthacrylate de méthyle en une quantité de pas moins de 30% en poids, (iii) des résines de polyacétal et (iv) des résines de polyamide,
dans lequel les résines thermoplastiques renforcées par du caoutchouc produites en utilisant du méthacrylate de méthyle en tant que composant monomère (i) sont choisies à partir du groupe constitué par

(i-1) une résine de copolymère renforcée par du caoutchouc obtenue par polymérisation d'un monomère contenant du méthacrylate de méthyle en présence du polymère de caoutchouc,
(i-2) une résine thermoplastique renforcée par du caoutchouc comprenant une combinaison de la résine de copolymère renforcée par du caoutchouc susmentionnée (i-1) et d'un (co)polymère obtenu par polymérisation d'un monomère contenant du méthacrylate de méthyle,
(i-3) une résine thermoplastique renforcée par du caoutchouc comprenant une combinaison de la résine de copolymère renforcée par du caoutchouc susmentionnée (i-1) et d'un (co)polymère obtenu par

polymérisation d'un monomère contenant un composé vinylique aromatique et un composé vinylique cyanuré, et
(i-4) une résine thermoplastique renforcée par du caoutchouc comprenant une combinaison d'une résine de copolymère renforcée par du caoutchouc obtenue par polymérisation d'un monomère contenant un composé vinylique aromatique et un composé vinylique cyanuré en présence du polymère de caoutchouc sans utiliser du méthacrylate de méthyle, et d'un (co)polymère obtenu par polymérisation d'un monomère contenant du méthacrylate de méthyle, et

(2) contenant le colorant chromatique et la substance noire en une quantité allant de 0,001 à 3 parties en poids et de 0,01 à 2 parties en poids, respectivement, sur la base de 100 parties en poids du polymère thermoplastique ; et

une couche B formée sur au moins une surface de la couche A, la couche B comprenant une résine thermoplastique transparente, et présentant une transmittance de lumière d'au moins 70% sous forme d'une seule couche.

2. Utilisation d'un stratifié, comprenant des couches A et B telles que définies dans la revendication 1, où la couche B est formée sur au moins une surface de la couche A, dans un procédé de marquage au laser multicolore comprenant (a) une étape d'irradiation de deux lumières laser ou plus ayant des énergies différentes sur le stratifié pour produire des marquages ayant deux tonalités de couleur ou plus sur celui-ci.

3. Processus selon la revendication 1 ou utilisation selon la revendication 2, où un polymère thermoplastique de la composition polymère thermoplastique de marquage au laser de développement multicolore constituant la couche A est un copolymère produit par copolymérisation d'un ester (méth)acrylique.

4. Processus ou utilisation selon la revendication 3, où le copolymère est un copolymère greffé renforcé par du caoutchouc.

5. Processus selon l'une quelconque des revendications 1, 3 et 4, ou utilisation selon l'une quelconque des revendications 2 à 4, où la résine thermoplastique transparente constituant la couche B est une résine de polyester.

6. Processus selon l'une quelconque des revendications 1 et 3 à 5 ou utilisation selon l'une quelconque des revendications 2 à 5, où la résine thermoplastique transparente contenue dans la couche B est soumise à un traitement anti-adhésion.

7. Processus ou utilisation selon la revendication 6, où la résine de polyester contient du 1,4-cyclohexane diméthanol en une quantité allant de 15 à 50% en moles sur la base de la totalité des composants diols contenus dans la résine de polyester.

8. Processus selon l'une quelconque des revendications 1 et 3 à 7 ou utilisation selon l'une quelconque des revendications 2 à 7, où le stratifié est sous la forme d'un film ou d'une feuille.

9. Utilisation selon l'une quelconque des revendications 2 à 8, dans laquelle le procédé de marquage au laser multicolore comprend en outre (b) une étape de fixation du stratifié marqué au laser résultant de l'étape (a) sur la surface de produits moulés en forme de feuille de résines thermoplastiques, où la couche B du stratifié est utilisée en tant que couche de revêtement adhésif ou couche de liaison par fusion pour réaliser une stratification du stratifié sur les produits.

**Fig. 1**

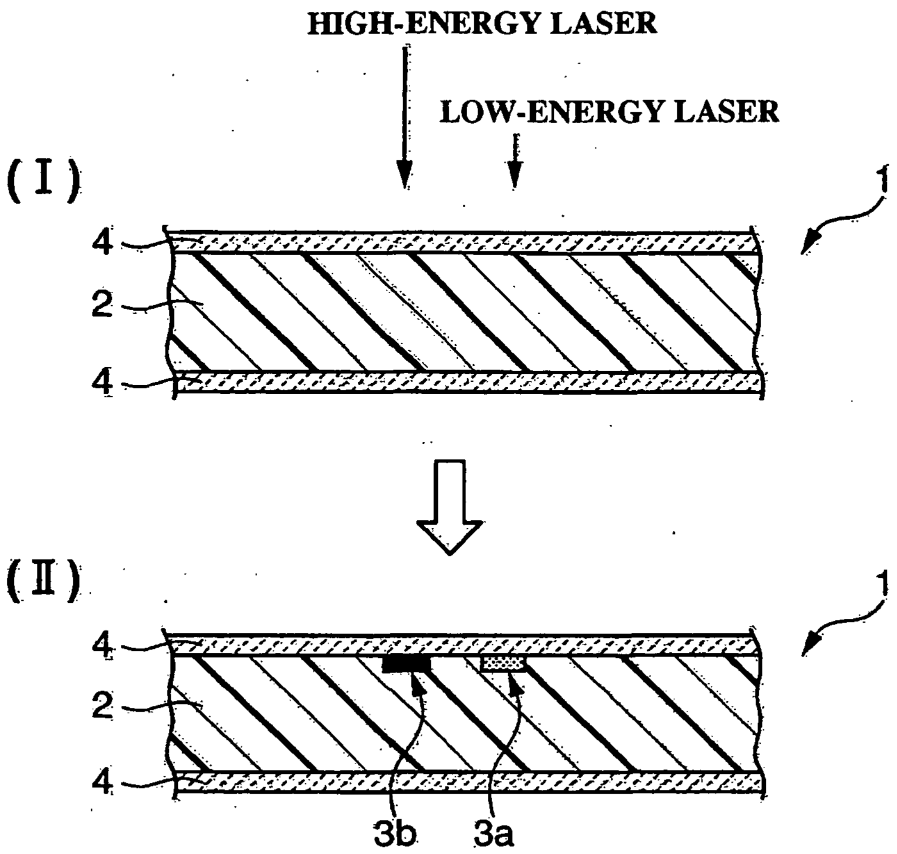
HIGH-ENERGY LASER
LOW-ENERGY LASER
(I)
(II)
1
4
2
4
3b
3a

**Fig. 2**

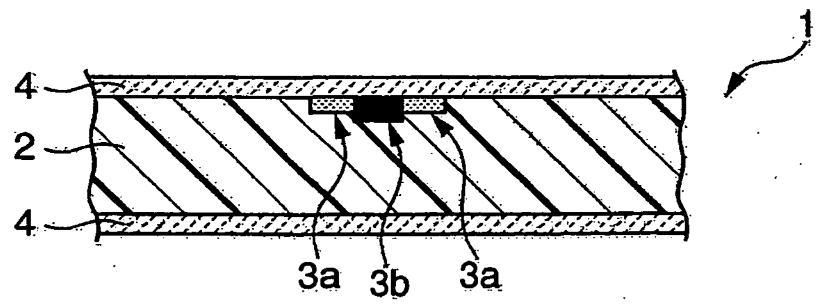
1
4
2
4
3a
3b
3a

Fig. 3

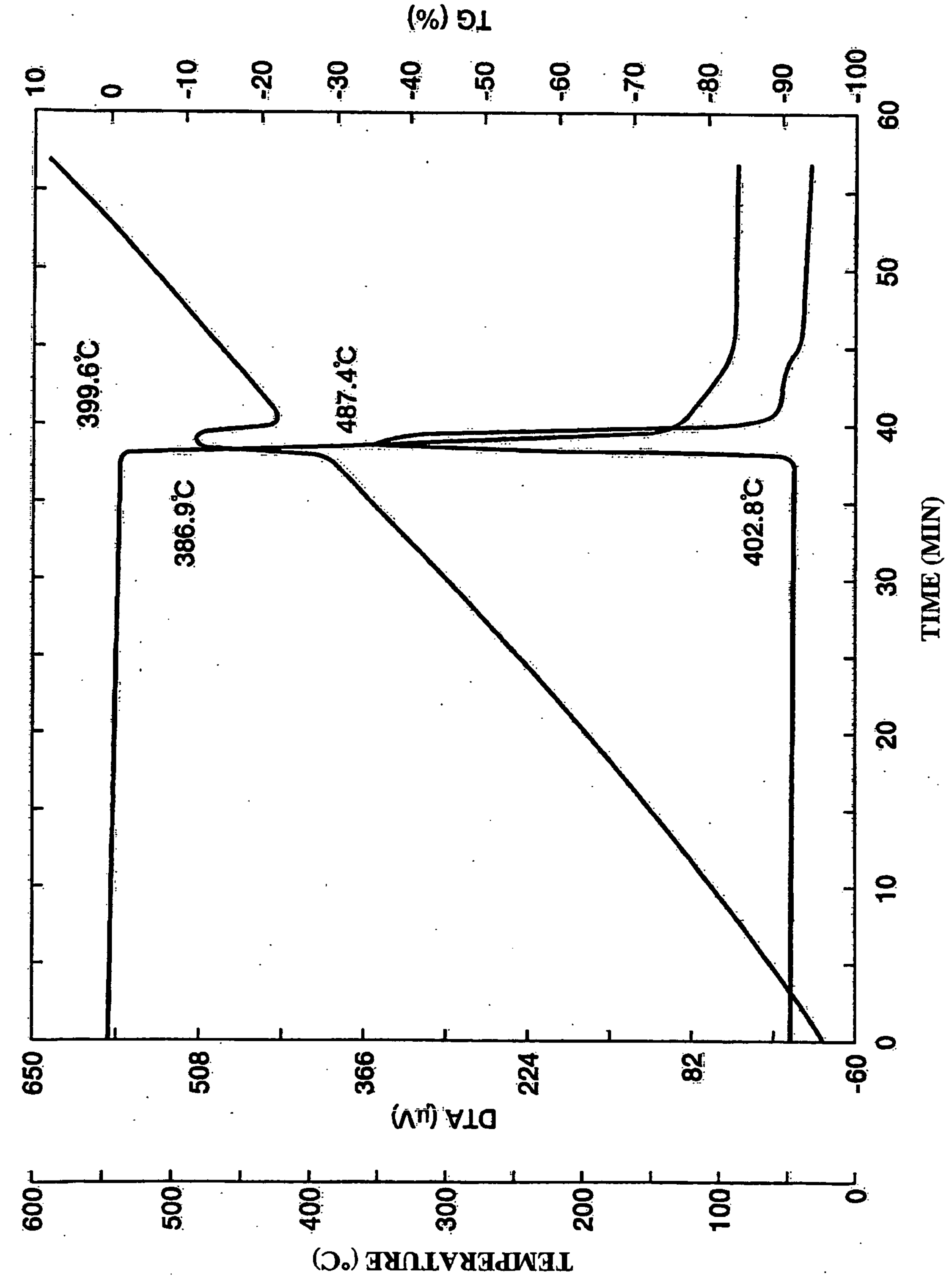

TG (%)
10
0
-10
-20
-30
-40
-50
-60
-70
-80
-90
-100
DTA (μV)
650
508
366
224
82
-60
TEMPERATURE (°C)
600
500
400
300
200
100
0
TIME (MIN)
0
10
20
30
40
50
60
399.6℃
487.4℃
386.9℃
402.8℃

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6297828 A
- JP 8127175 A
- JP 2001302872 A
- WO 2004113090 A1
- EP 1228893 A2
- EP 0258836 A
- US 6482768 B1
- JP 2002273832 A
- JP 2001011326 A
- JP 08127175 A
- JP 2004267602 A
- JP 59005216 A